# EUROPEAN PATENT SPECIFICATION

(11) **EP 3 858 086 B1**
(45) Date of publication and mention of the grant of the patent: **12.07.2023**
(21) Application number: 19769928.3
(22) Date of filing: 10.09.2019
(51) Int. Cl.: H04W 76/15

(54) **METHODS AND APPARATUSES FOR HANDLING DUAL CONNECTIVITY IN REDUNDANCY TRANSMISSION**
VERFAHREN UND VORRICHTUNGEN ZUR HANDHABUNG VON DUALER KONNEKTIVITÄT IN DER REDUNDANZÜBERTRAGUNG
PROCÉDÉS ET APPAREILS POUR GÉRER UNE CONNECTIVITÉ DOUBLE DANS UNE TRANSMISSION REDONDANTE

(30) Priority: 28.09.2018 US 201862738124 P
(43) Date of publication of application: 04.08.2021
(73) Proprietor: TELEFONAKTIEBOLAGET LM ERICSSON (PUBL), 164 83 Stockholm (SE)
(72) Inventor: SHI, Nianshan, 176 74 Järfälla (SE); SCHLIWA-BERTLING, Paul, 590 71 Ljungsbro (SE); DUDDA, Torsten, 52076 Aachen (DE); MIKLÓS, György, 2097 Pilisborosjenö (HU)
(74) Representative: Ericsson
(86) International application number: PCT/SE2019/050848
(87) International publication number: WO 2020/067956

(56) References cited:
- US-A1- 2018 199 315
- "3rd Generation Partnership Project; Technical Specification Group Services and System Aspects; Study on enhancement of Ultra-Reliable Low-Latency Communication (URLLC) support in the 5G Core network (5GC) (Release 16)", 3GPP STANDARD; TECHNICAL REPORT; 3GPP TR 23.725, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.0.0, 8 September 2018 (2018-09-08), pages 1-59, XP051486951, [retrieved on 2018-09-08]
- "3rd Generation Partnership Project; Technical Specification Group Radio Access Network; Evolved Universal Terrestrial Radio Access (E-UTRA) and NR; Multi-connectivity; Stage 2 (Release 15)", 3GPP DRAFT; DRAFT_37340-F30_V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 25 September 2018 (2018-09-25), XP051519447, Retrieved from the Internet: URL:http://www.3gpp.org/ftp/tsg%5Fran/WG2% 5FRL2/Specifications/201809%5Fdraft%5Fspec s%5Fafter%5FRAN%5F81/Draft%5F37340%2Df30%5 Fv2%2Ezip [retrieved on 2018-09-25]

## Description

### TECHNICAL FIELD

Embodiments herein relate to network nodes, computer programs and methods performed therein, for handling dual connectivity (DC) in redundancy transmission.

### BACKGROUND

In a typical wireless communication network, wireless devices, also known as wireless communication devices, mobile stations, stations (STA) and/or User Equipment (UE), communicate via a Local Area Network such as a Wi-Fi network or a Radio Access Network (RAN) to e.g. one or more core networks (CN). The RAN covers a geographical area which is divided into service areas or cell areas, which may also be referred to as a beam or a beam group, with each service area or cell area being served by a radio network node such as a radio access node e.g., a Wi-Fi access point or a radio base station (RBS), which in some networks may also be denoted, for example, a NodeB, eNodeB (eNB), or gNB as denoted in a Fifth Generation (5G) network. A service area or cell area is a geographical area where radio coverage is provided by the radio network node. The radio network node communicates over an air interface operating on radio frequencies with the wireless device within range of the radio network node.

Specifications for the Evolved Packet System (EPS), also called a Fourth Generation (4G) network, have been completed within the 3rd Generation Partnership Project (3GPP) and this work continues in the coming 3GPP releases, for example to specify a 5G network also referred to as 5G New Radio (NR). The EPS comprises the Evolved Universal Terrestrial Radio Access Network (E-UTRAN), also known as the Long Term Evolution (LTE) radio access network, and the Evolved Packet Core (EPC), also known as System Architecture Evolution (SAE) core network. E-UTRAN/LTE is a variant of a 3GPP radio access network wherein the radio network nodes are directly connected to the EPC core network rather than to radio network controllers (RNC) used in 3G networks. In general, in E-UTRAN/LTE the functions of a 3G RNC are distributed between the radio network nodes, e.g. eNodeBs in LTE or gNBs in 5G, and the core network. As such, the RAN of an EPS has an essentially "flat" architecture comprising radio network nodes connected directly to one or more core networks, i.e. they are not connected to RNCs. To compensate for that, the E-UTRAN specification defines a direct interface between the radio network nodes, this interface being denoted the X2 interface.

Next generation telecommunications systems, which may herein also be referred to as NR or 5G, are expected to support a wide range of use cases with varying requirements ranging from fully mobile devices to stationary Internet of Things (IoT) devices or fixed wireless broadband devices.

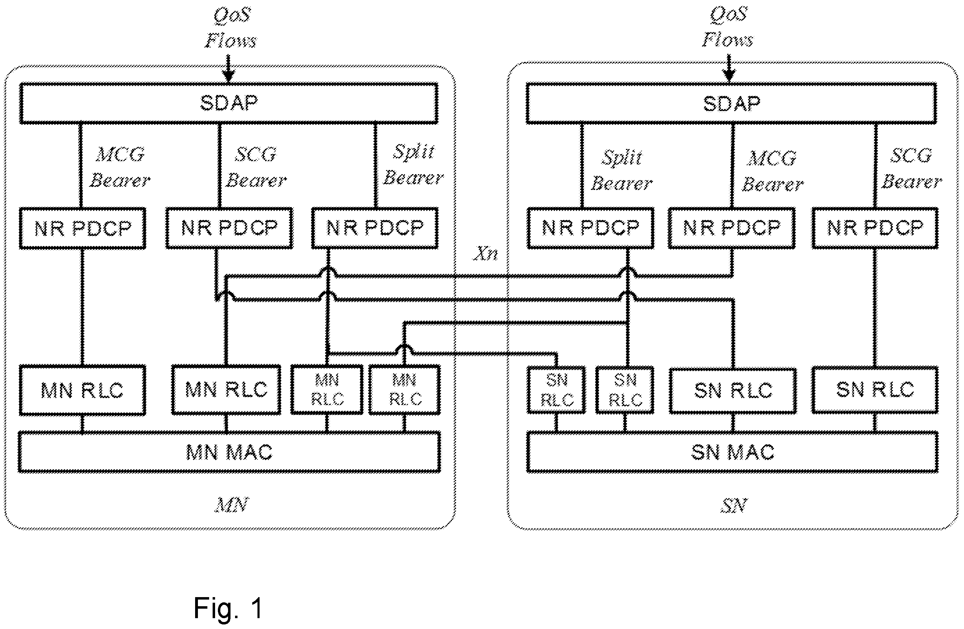

The 3GPP release 15 introduces NR dual connectivity, which is expanded to cover dual connectivity between an LTE node and a NR node, or between two NR nodes. The bearer types are enriched and a Service Data Adaptation Protocol (SDAP) entity may reside either at a primary node, which may also be referred to as a Master Node (MN), or at a Secondary Node (SN), as shown in Figure 1. The MN may e.g. be a Master NG-RAN node (M-NG-RAN node) and the SN may e.g. be a Secondary NG-RAN node (S-NG-RAN node). Furthermore, one Protocol Data Unit (PDU) session may be split into two tunnels in a User Plane Function (UPF), in this case two SDAP protocol entities may exist for the same PDU session, one for MN and another one for SN.

3GPP TR 23.725 V1.0.0; 3rd Generation Partnership Project; Technical Specification Group Services and System Aspects; Study on enhancement of Ultra-Reliable Low-Latency Communication (URLLC) support in the 5G Core network (5GC) (Release 16) discloses a MgNB which requests in a SN Addition Request message the SgNB to setup the SCG bearer in the SgNB.

Figure 1 discloses an example of Dual Connectivity in Multi RAT-Dual Connectivity (MR-DC) with 5G Core (5GC) in 5G. In NR, the PDU session comprises Quality of Service (QoS) flows. The QoS flows are mapped by the RAN into radio bearers, there will be no one to one mapping of the QoS flows.

5G is expected to support an Enhanced Mobile Broadband through media distribution, Massive Machine Type of Communication (M-MTC) and Mission Critical Services, such as e.g. Critical Machine Type of Communication (C-MTC).

A C-MTC Use Case group covers a big set of applications, which may be characterized by low latency and high reliability, as well as high availability. Such applications may be referred to as Ultra-Reliable and Low Latency Case (URLLC). The high reliability is expected to be a basic requirement in much wider range of services. For example, the low latency and high reliability are important factors for example in Industry (Factory) Automation Use Cases, such as e.g. high speed motion control, packaging, printing, etc., and several special subtasks of Smart Grid service. In the above use cases the guarantees on latency and reliability requirements together provide a sufficient service quality. High reliability is also important in such use cases where relaxed requirements on latency are present, such as e.g. when higher delay and/or higher jitter can be tolerated. Illustrative examples may e.g. be Intelligent Traffic Systems (ITS), remote controlling (with or without haptic feedback), robotized manufacturing, Smart Grid, Automated Guided Vehicles (AGVs), Drone Controlling, tele-surgery, etc. In these cases, an extremely low latency is not a crucial factor, but a high (and in some cases, an extremely high) reliability of the connectivity between an application server and a C-MTC device is the most important requirement. To sum up, reliability is an important requirement in the case of use cases with low latency requirement, but the reliability in itself could be the basic characteristic of C-MTC services.

The high reliability may be supported by redundant transmission in the user plane. There may be several approaches for providing the redundant transmission.

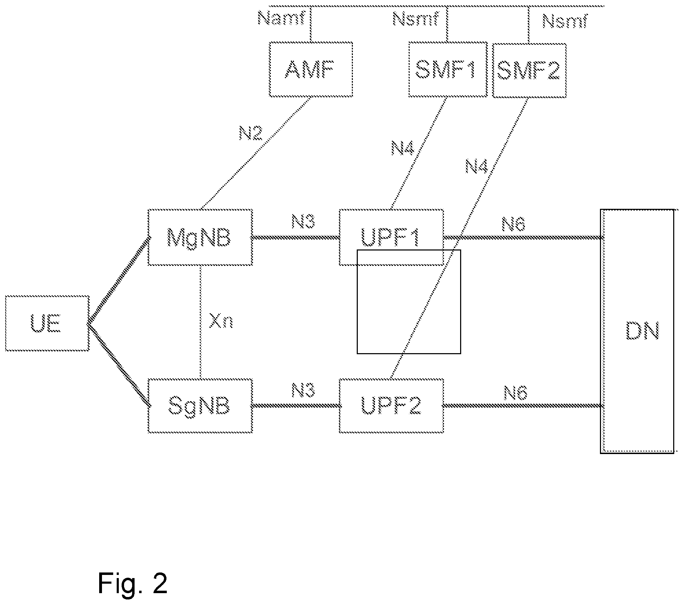

A first approach may be based on the Dual Connectivity (DC) feature of 5G or 4G/LTE. Dual connectivity allows a single UE that is suitably equipped with two transceivers to have user plane connectivity with two RAN nodes, while it is connected in the control plane to a single RAN node. In this case two PDU sessions may be setup, such that the CN selects separate UPF entities, and the CN also requests RAN to establish dual connectivity and handle the first PDU session via a Master gNB (MN) and handle the second PDU session via a Secondary gNB (SN), as disclosed in Figure 2. Figure 2 discloses two PDU sessions being setup to achieve redundancy.

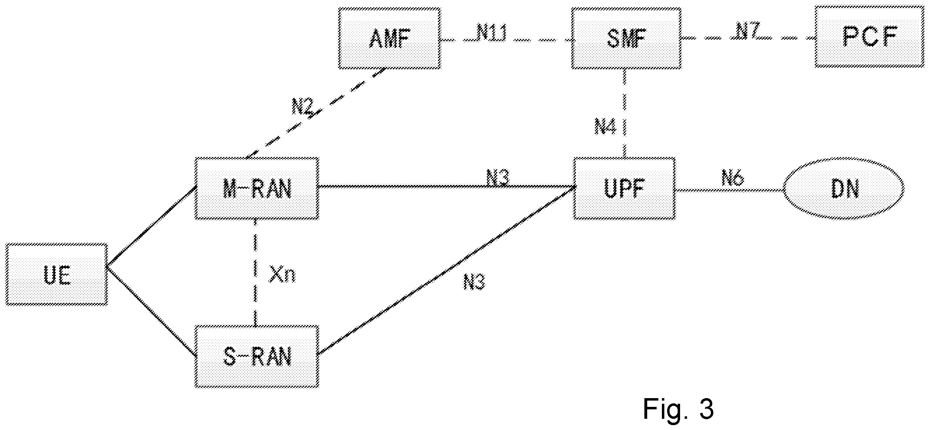

A second approach may be based on redundant transmission in the DC architecture. According to this second approach only one PDU session may be setup, but the QoS Flows may be setup redundantly. The PDU session may be transferred via both MN and SN nodes. With two different New Generation Radio Access Network (NG-RAN) nodes, as the RAN nodes are denoted in 5G, separate transport layer paths may be used for redundant data transmission in user plane, as disclosed in Figure 3. Figure 3 discloses that QoS flows in the PDU session are redundant and sent via two tunnels.

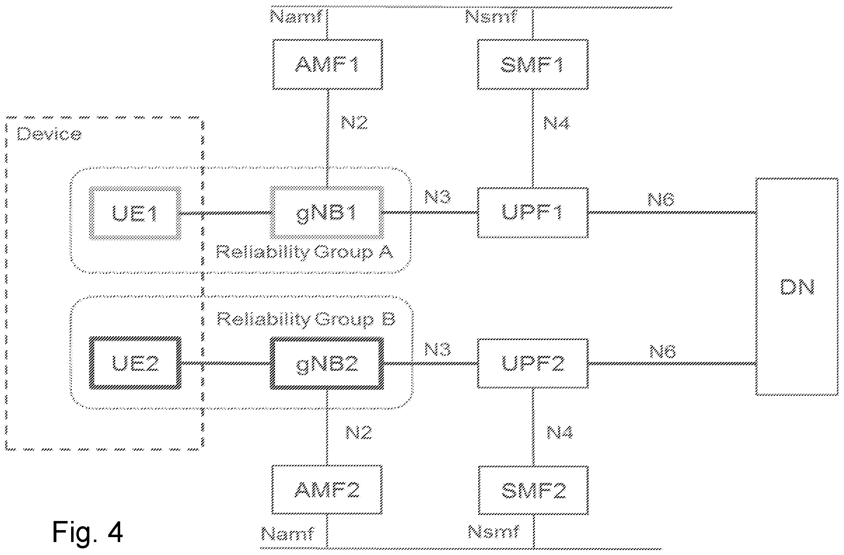

Another approach may be to equip a terminal device with multiple physical UEs. It may then be possible to set up disjoint paths with disjoint PDU-sessions from these UEs. The solution according to this approach presents a way to select different RAN entities for the UEs based on a static grouping. The solution is illustrated in figure 4, where a terminal device is equipped with a first UE (UE1) and a second UE (UE2), and the network may provide redundant coverage with RAN entities, denoted as gNB1 and gNB2, that may be selected such that UE1 connects to gNB1, and UE2 connects to gNB2. Figure 4 discloses a terminal device equipped with multiple physical UEs to achieve redundancy.

Redundant handling may in some embodiments apply to only a subset of the data flows. It may be possible that there are further PDU Sessions which are not subject to redundant handling. It may also be possible that the PDU Sessions with redundant handling also carries other traffic flows which are not subject to redundant handling, i.e., not replicated or otherwise protected by an end to end redundancy mechanism.

### SUMMARY

There are, proposed herein, various embodiments for handling dual connectivity in redundancy transmission.

The invention is defined by the appended independent claims 1, 7 and 13-15.

According to one aspect there is provided a method performed by a first RAN node (110), such as a Master Node, MN, for handling dual connectivity, DC in redundancy transmission in a wireless communications network, wherein a first PDU session and/or QoS flow is established from a User Equipment, UE, to a Core Network, CN via the first RAN node. The first RAN node determines to set up a second PDU session and/or QoS flow between the UE and the CN via a second RAN node. The first RAN node further sends , to the second RAN node, a request for setup of a second PDU session and/or QoS flow, wherein the request comprises an indication that the second PDU session and/or QoS flows are setup for redundancy transmission. The indication may be referred to as a "Redundant Transmission Indication".

According to another aspect there is provided a method performed by a second RAN node, such as a Secondary Node, SN, for handling dual connectivity, DC, in redundancy transmission in a wireless communications network, wherein a first PDU session and/or QoS flow is established from a User Equipment, UE, to a Core Network, CN, via a first RAN node. The second RAN node receives, from the first RAN node, a request for setup of a second PDU session and/or QoS flow, wherein the request comprises an indication that the second PDU session and/or QoS flows are setup for redundancy transmission. The indication may be referred to as a "Redundant Transmission Indication".

According to further aspects, corresponding network nodes and computer programs are provided.

### BRIEF DESCRIPTION OF THE DRAWINGS

- Figure 1: is a schematic block diagram illustrating dual connectivity in MR-DC with the 5GC in 5G,
- Figure 2: is a schematic block diagram illustrating embodiments of a wireless communications network in which two PDU sessions are setup to achieve redundancy,
- Figure 3: is a schematic block diagram illustrating embodiments of a wireless communications network in which QoS flows in the PDU session are redundant and sent via two tunnels,
- Figure 4: is a schematic block diagram illustrating embodiments of a wireless communications network in which a terminal device is equipped with multiple physical UEs to achieve redundancy,
- Figure 5: is a schematic block diagram illustrating embodiments of a wireless communications network,
- Figure 6: is a signaling diagram illustrating the signaling between a first and a second RAN node according to a first aspect of embodiments herein,
- Figure 7: is a signaling diagram illustrating the signaling between a first and a second RAN node according to a second aspect of embodiments herein,
- Figure 8: is a signaling diagram illustrating the signaling between a first and a second RAN node according to a third aspect of embodiments herein,
- Figure 9: is a flowchart depicting a method performed by a first RAN node according to a first aspect of embodiments herein,
- Figure 10: is a flowchart depicting a method performed by a second RAN node according to a first aspect of embodiments herein,
- Figure 11: is a flowchart depicting a method performed by the first RAN node according to a second aspect of embodiments herein,
- Figure 12: is a flowchart depicting a method performed by the second RAN node according to a second aspect of embodiments herein,
- Figure 13: is a schematic block diagram illustrating some first embodiments of the first RAN node,
- Figure 14: is a schematic block diagram illustrating some second embodiments of the first RAN node,
- Figure 15: is a schematic block diagram illustrating some first embodiments of the second RAN node,
- Figure 16: is a schematic block diagram illustrating some second embodiments of the second RAN node,
- Figure 17: is a schematic block diagram illustrating a host computer communicating via a base station with a user equipment over a partially wireless connection in accordance with some embodiments;
- Figure 18: is a schematic overview of a host computer communicating via a base station with a user equipment over a partially wireless connection in accordance with some embodiments;
- Figure 19: is a flowchart depicting methods implemented in a communication system including a host computer, a base station and a user equipment in accordance with some embodiments;
- Figure 20: is a flowchart depicting methods implemented in a communication system including a host computer, a base station and a user equipment in accordance with some embodiments;
- Figure 21: is a flowchart depicting methods implemented in a communication system including a host computer, a base station and a user equipment in accordance with some embodiments;
- Figure 22: is a flowchart depicting methods implemented in a communication system including a host computer, a base station and a user equipment in accordance with some embodiments.

### DETAILED DESCRIPTION

In the current MR-DC, for both MN terminated bearer and SN terminated bearer, it is possible to setup Master Cell Group (MCG) bearer, Second Cell Group (SCG) bearer and split bearer, depending on where the RLC bearer and the radio resources are used. The MN terminated bearer shall herein be interpreted as a radio bearer for which PDCP is located in the MN. The SN terminated bearer shall herein be interpreted as a radio bearer for which PDCP is located in the SN. MCG Bearer shall in MR-DC be interpreted as a radio bearer having an RLC bearer only in the MCG. SCG Bearer shall in MR-DC be interpreted as a radio bearer having an RLC bearer only in the SCG. Split Bearer shall in MR-DC be interpreted as a radio bearer having RLC bearers both in MCG and SCG.

All the possible bearer type change options are supported:
- MCG bearer to/from split bearer;
- MCG bearer to/from SCG bearer;
- SCG bearer to/from split bearer.

Bearer termination point change is supported for all bearer types, and may be performed with or without bearer type change:
- MN terminated bearer to/from SN terminated bearer.

In the redundant handling, such as e.g. in C-MTC, the idea is to utilize the resource in the RAN nodes involved in DC solely, i.e. the SN terminated bearer should not further use the radio resources in MN, and the MN terminated bearer should not use the radio resources in SN, for the concerned QoS flows.

In an alternative approach that equips the terminal device with multiple physical UEs, which may herein be referred to as paired UEs, the DC operation or handover may be restricted to not access the RAN node that serves the other UE in the pair.

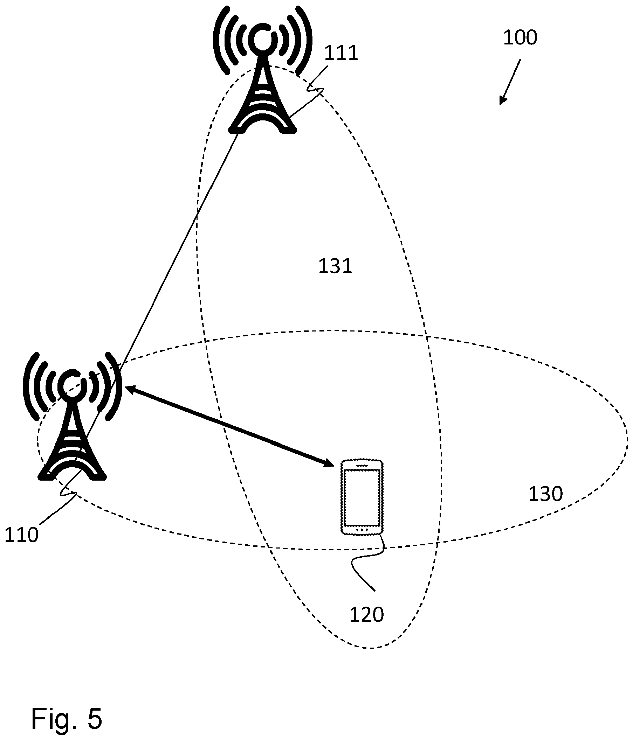

**Figure 5** illustrates a communication scenario in an exemplified wireless communication network 100, where at least some of the embodiments herein may be used. The wireless communication network 100 comprises one or more UEs, such as a UE 120. The UEs may e.g. be mobile phones, smart phones, laptop computers, tablet computers, Machine-Type Communication (MTC) devices, mobile stations, stations (STA), or any other devices that can provide wireless communication. Each UE 120 may thus also be referred to as a wireless device. The UE 120 may communicate via the wireless communication network 100, such as a Local Area Network (LAN), such as e.g. a Wi-Fi network, or a Radio Access Network (RAN), such as e.g. an Evolved Universal Terrestrial Radio Access Network (E-UTRAN) or a Fifth Generation (5G) RAN to a backhaul network 13, such as e.g. an Evolved Packet Core (EPC) or a 5th Generation Core (5GC). The wireless communication network 100 further comprises a plurality of network nodes 110, 111, such as e.g. radio access nodes e.g., a Wi-Fi access point or a radio base station (RBS), which in some networks may also be denoted, for example, a NodeB, an E-Utran NodeB (eNB), or a gNB as denoted in New Radio (NR). NR may also be referred to as 5th-Generation Wireless Systems (5G). Each of the one or more network node(s) 110, 111 serves one or more coverage area(s) 130, 131, which may also be referred to as e.g. a cell, a beam or a beam group. In order to determine the best available cell for the UE 120, the UE 120 may perform measurements, which may also be referred to as mobility measurements, in order to monitor and report the serving cell and neighboring cell(s) signal level and quality. The measurements may then be sent from the UE 120 to the network nodes 110, 111 and may be used to assist the network nodes 110, 111 to choose a suitable serving cell for the UE 120. There may be different reasons to relocate the UE 120 from a current serving cell to another cell, such as e.g. coverage reasons, traffic load level or support of a specific service.

In the following, the embodiments will be presented on the non-limiting example of NG-RAN and 5GC, where gNB is taken as an example of a RAN node and Access and Mobility Management Function (AMF) is an example of a mobility management (MM) node. This is a non-limiting example. The messages and the information element (IE) names are examples and may be implemented differently.

In embodiments setting up two PDU session (as disclosed in Figure 2), or using QoS flow redundancy in one PDU session (as disclosed in Figure 3), the 5GC may, during the PDU sessions setup, indicate that the PDU sessions or the QoS flows are setup for redundancy purpose.

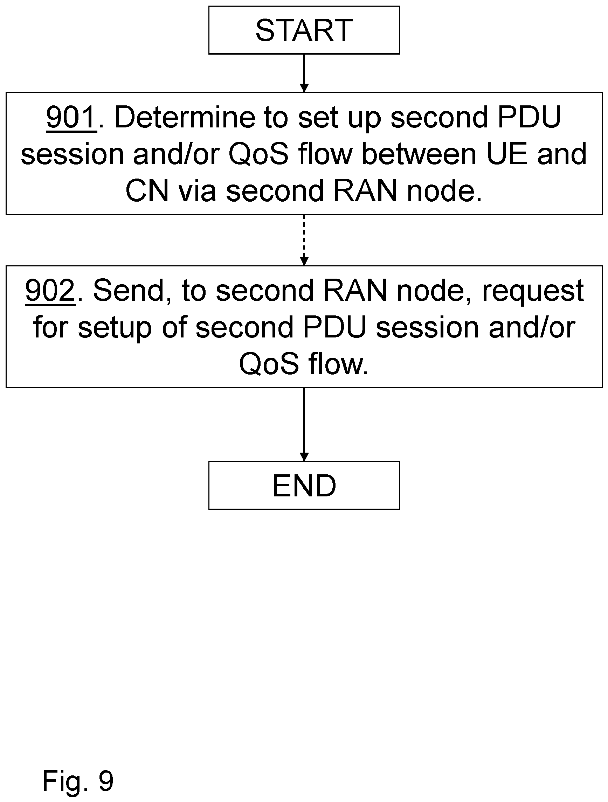

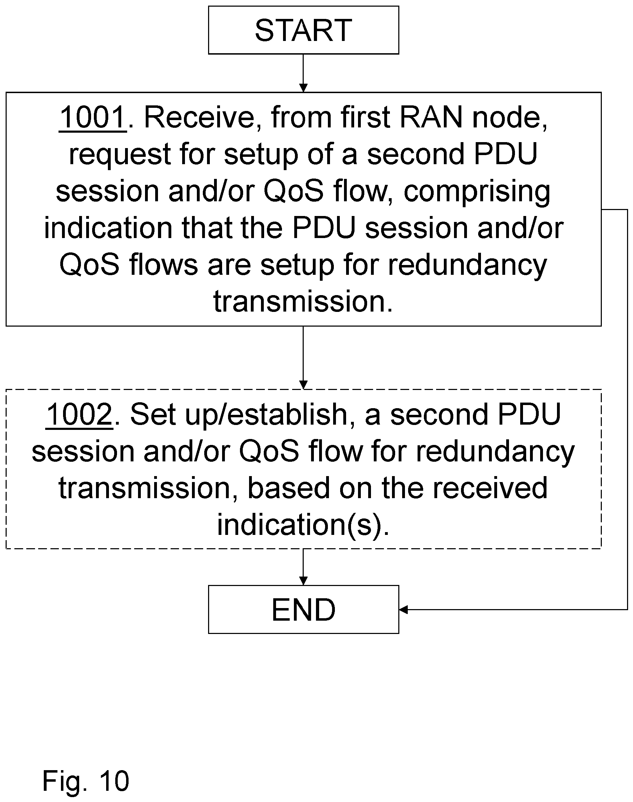

According to one embodiment,
1. A Master Node (MN) may decide to setup Secondary Node (SN) termination and may indicate to the SN that the concerned PDU session, or the concerned QoS flows in the PDU session are setup for redundancy transmission; This step 1 is similar to action 901 described in relation to figure 9.
2. The SN may, upon the reception of such an indication, understand and/or determine that for the concerned PDU session, or the concerned QoS flows, only SCG bearers are allowed to be setup; This step 2 is similar to actions 1001 and 1002 described in relation to figure 10.
3. The SN may store the information and prevent any future bearer type changes for the concerned PDU session or concerned QoS flows.

Table 5 shows an example of the indication in the requested denoted as a "Redundant Transmission Indication" being introduced in chapter 9.2.1.5 "PDU Session Resource Setup Info - SN terminated" in 3GPP Technical Specification (TS) 38.423. The Information Element (IE) referred to as "PDU Session Resource Setup Info - SN terminated" comprises information for the addition of S-NG-RAN node resources related to a PDU session for Data Radio Bearers (DRB) configured with an SN terminated bearer option.

**Table 5: A "Redundant Transmission Indication" may be introduced in "PDU Session**

| **IE/Group Name** | | | **Presen ce** | **Rang e** | **IE type and reference** | **Semantics description** | **Criticali ty** | **Assig ned Critica lity** |
|---|---|---|---|---|---|---|---|---|
| UL NG-U UP TNL Information at UPF | | | M | | UP Transport Layer Information 9.2.3.30 | UPF endpoint of the NG-U transport bearer. | - | |
| | | | | | | For delivery of UL PDUs | | |
| PDU Session Type | | | M | | 9.2.3.19 | | - | |
| **QoS Flows To Be Setup List** | | | | 1 | | | - | |
| | **>QoS Flows To Be Setup Item** | | | 1 .. *<max noofQ oSFlo* ws> | | | - | |
| | | >>QoS Flow Indicator | M | | 9.2.3.10 | | - | |
| | | >>QoS Flow Level QoS Parameters | M | | 9.2.3.5 | For GBR QoS flows, this IE contains GBR QoS flow information as received at NG-C | - | |
| | | >>Offered GBR QoS Flow Information | O | | GBR QoS Flow Information 9.2.3.6 | This IE contains M-Node offered GBR QoS Flow Information. | - | |
| DL Forwarding | | | O | | 9.2.3.34 | This IE may need to be refined. Placeholder IE only. | - | |
| Security Indication | | | O | | 9.2.3.52 | | - | |
| **Redundant Transmission Indication** | | | O | | **ENUMERA TED(true, ...)** | **This IE indicates the PDU session is required to be setup as SCG bearer.** | | |

| | | | | | | | | |
|---|---|---|---|---|---|---|---|---|
| Resource Setup Info - SN terminated" in TS 38.423. | | | | | | | | |

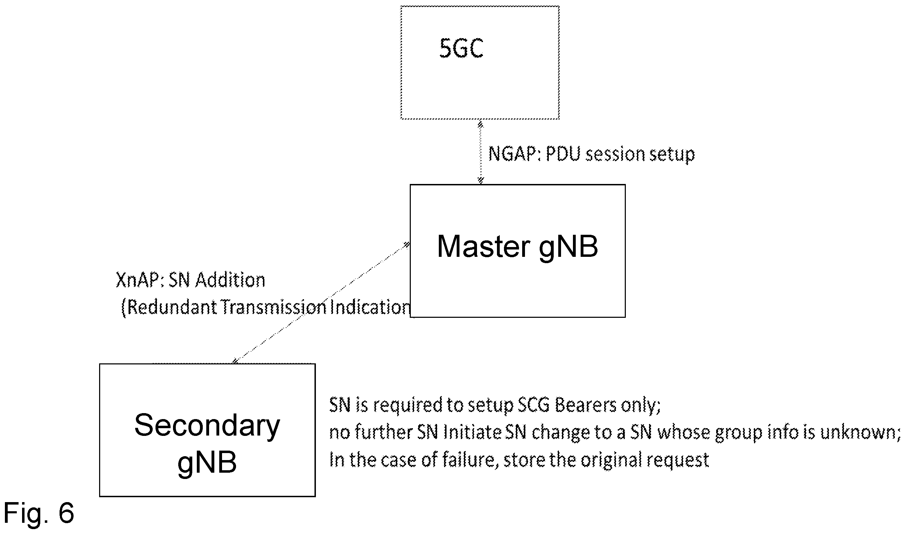

**Figure 6** discloses an overview of some of the embodiments for ensuring that radio resources for the two transmission paths in DC are each allocated solely in the given RAN node. When a PDU session is setup between the MgNB and the 5GC, the MgNB may send a redundant transmission indication to the SgNB, indicating to the SgNB that the concerned PDU session, or the concerned QoS flows in the PDU session are to be setup for redundancy transmission.

According to some embodiments, the MN may indicate to the SN that the setup of the PDU session is for redundant transmission and that it shall have high priority in the resource allocation. Having a high priority shall be interpreted as the PDU session for redundancy transmission being prioritized over other PDU sessions when scheduling the radio resources.

According to some further embodiments, the MN may provide an indication, to prevent the SN to perform further SN initiated SN change due to the redundant transmission requirement.

According to some further embodiments, the MN may provide an indication (e.g. within SgNB Addition Request) of the radio resources used by the MN (e.g. cell identifiers, frequency carrier identifiers) so that the SN is informed to NOT use those resources that are used by the MN. Thereby, bearer type selection or change may be possible, as long as the indicated resources are not the same for the MN and the SN. This embodiment allows the SN to use RLC and radio resources in a different node, such as the MN, but it shall not use the same radio resources as used by the MN.

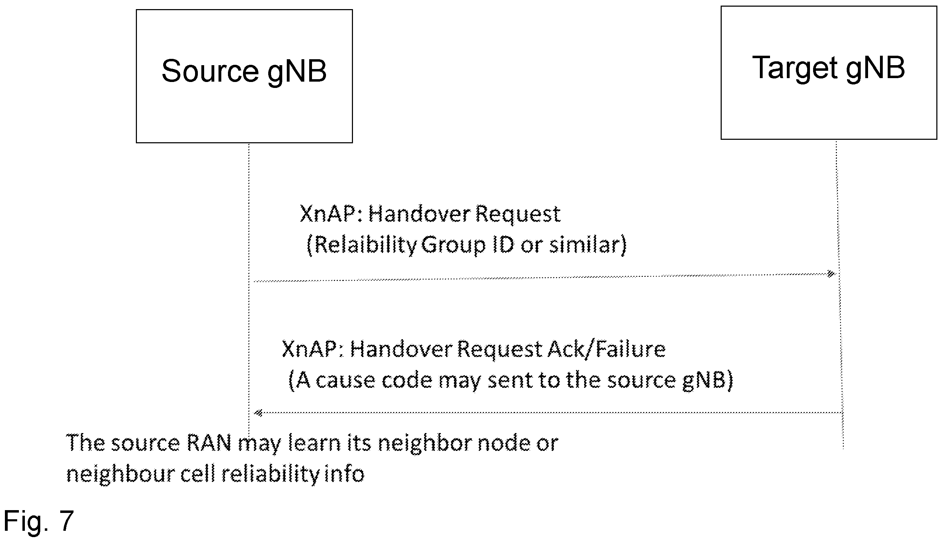

In embodiments using multiple UEs within a device, such as disclosed in Figure 4, to prevent setting up a DC operation or a handover to a RAN node which is not suitable, such as e.g. when the node is serving the paired UEs. **Figure** 7 provides an overview of some embodiments relating to solutions for preventing a handover being set up to an unsuitable node. As shown in figure 7, a source gNB may send a message, such as a Handover request, to a target gNB. The message may comprise a reliability group ID or similar. Each of the UEs and/or nodes, such as e.g. RAN nodes, comprised in the redundant transmission belongs to a different reliability group. The reliability groups may be used to separate the radio resources used for the redundant transmission, in order to prevent the UEs and or the nodes involved in the redundant transmission to use the same radio resources. Thereby, the redundancy of the transmissions may be ensured. The source gNB may respond to the message received from the source gNB by sending a response, such as a Handover Request Acknowledgement (Ack) and/or Failure, which may also be referred to as a Non-Acknowledgement (Nack), to the source gNB. The response may comprise a cause code. The source RAN node, such as the source gNB, may thereby obtain and/or learn the reliability information of the neighbor node and/or neighbor cell. Although, figure 7 discusses a handover scenario, a similar signaling is also applicable when setting up DC.

According to one embodiment, an indication to identify a "reliability group" or similar for the UE or the nodes may be provided from a first network node, such as e.g. the MN or the source NG-RAN node, to a second RAN node, such as e.g. the SN or the target NG-RAN node, in the DC messages, such as e.g. S-NG-RAN node Addition and/or Modification messages, or Handover message, such as e.g. handover over Xn or N2. Thereby the SN may accept or reject setting up DC or handover based on if the SN is allowed to serve the reliability groups. The indication may be provided by the MN or another source NG-RAN sending the indication to the SN.

According to a further embodiment, an indication to identify the UEs that are paired to each other, such as e.g. a device identifier or similar, may be provided in the DC messages (such as e.g. the S-NG-RAN node Addition and/or Modification) or Handover message (handover over an Xn-interface or an N2-interface), so that the SN may accept or reject setting up DC or handover based on if the SN is currently serving the "paired UE". The indication may be provided by the first RAN node 110, such as e.g. the MN or the source NG-RAN, sending the indication to the second RAN node 111, such as e.g. the SN or the target N-RAN node.

According to a further embodiment, the SN (for DC) or the target NG-RAN node (for handover) may in the reply to the MN (for DC) or the source NG-RAN node (for handover) indicate the reliability groups the SN or the target NG-RAN node belongs to, and the MN or the source NG-RAN node may store this information. The stored information may be used to build up a neighbor relation table, such as e.g. a neighboring node relation table. This information may be used to prevent setup of DC or a handover to an unsuitable node. In the case of DC, the SN may in the reply to the MN indicate the reliability groups the SN belongs to, and the MN may store this information. The stored information may be used to build up a neighbor relation table, such as e.g. a neighboring node relation table. This information may be used to prevent setup of DC to an unsuitable node. In the case of handover, the target NG-RAN node may in the reply to the source NG-RAN node indicate the reliability groups the target NG-RAN node belongs to, and the source NG-RAN node may store this information. The stored information may be used to build up a neighbor relation table, such as e.g. a neighboring node relation table. This information may be used to prevent a handover to an unsuitable node.

Although Operations, Administration and Maintenance (OAM) configuration may be used to let a RAN node know which neighbors, such as neighbor nodes, are suitable for setting up DC or performing a handover to, there may be cases where OAM may not be enough, such as e.g. in the case where the SN initiates a change, which may herein also be referred to as a handover, to another SN node to the MN. In one embodiment, the MN may provide the Reliability Information of the MN to the source SN node during the S-NG-RAN node Addition Preparation procedure in order to prevent the SN from initiating a change to a wrong SN. A wrong SN shall herein be interpreted as a SN which is not allowed to serve the reliability group indicated by the reliability information.

In another embodiment, the MN may provide a list of its neighbor reliability information to the SN in order to assist the SN to perform an "SN initiated SN change".

In another embodiment, the MN may provide an indication to the SN, wherein the SN based on the indication is prevented to perform further SN initiated SN change due to the redundant transmission requirement.

In another embodiment a first RAN node may provide, e.g. in the Xn setup procedure, information to a second RAN node, concerning the UEs that participate in the multiple UEs solution and are allowed or disallowed to be served by the first RAN node. In return the second RAN node may provide, e.g. in the Xn setup procedure, information to the first RAN node, concerning the UEs that participate in the multiple UEs solution and are allowed or disallowed to be served by the second RAN node. Hence, the first and the second RAN nodes exchange information regarding the UEs that are allowed or disallowed to be served by each of the RAN nodes. This information may be used by the RAN nodes to prevent a setup of DC or a Handover to an RAN node unsuitable, which may also be referred to as being not suitable, for handling a specific UE.

In another embodiment two NG-RAN nodes may exchange information concerning the UEs that participate in the multiple UEs solution and that are allowed or disallowed to be served by these NG-RAN nodes using an Uplink RAN Configuration Transfer procedure and Downlink RAN Configuration Transfer procedure respectively. This information may be used to prevent the setup of DC or the Handover to an unsuitable node.

The 5GC may further provide information, which information may be used to instruct the MN on further mobility. According to one embodiment information about the other RAN node's reliability group information, or similar, may be provided by the 5GC, e.g. in a Mobility Restriction List.

When configuring the UE with measurement reports for mobility, such as e.g. handover or DC, the first RAN node, such as e.g. the MN or the source NG-RAN node, may use information about frequency layers and/or carriers supported by the second RAN node, which second RAN node, based on the above embodiments, is considered as suitable/not suitable as a SN or a target NG-RAN node for DC or handover configuration.

In order to assist the MN to setup a redundant transmission path, according to one embodiment, the 5GC may, in addition to providing the desired for setting up the DC, also provide a candidate list to the MN. Based on the candidate list the MN may choose a different SN in case the MN fails to setup DC towards the first SN.

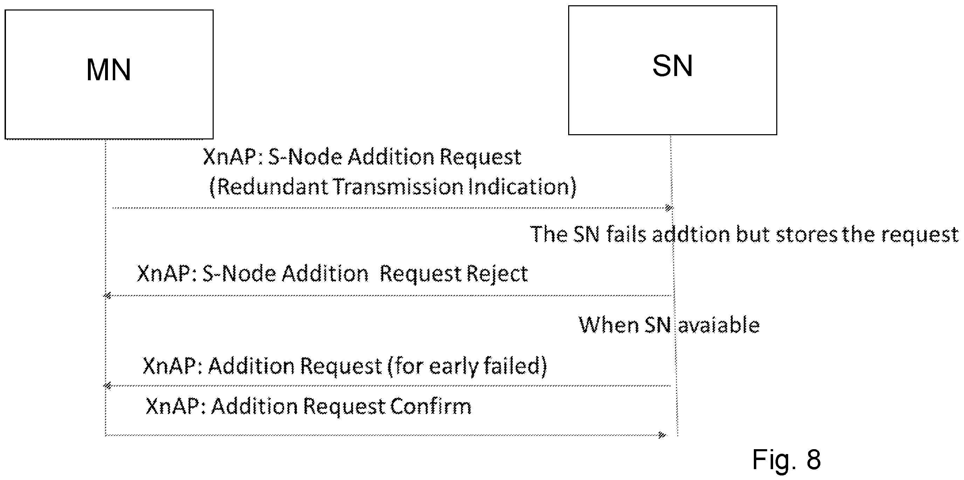

**Figure 8** discloses a signaling diagram for setting up a redundant transmission path. The first RAN node 110, such as e.g. the MN may send an SN Addition Request, which in Figure 8 is indicated as an S-Node Addition Request, to the second RAN node 111, such as e.g. the SN. The second RAN node 111, such as e.g. the SN, may reject the SN node addition procedure, e.g. by sending an XnAP: S-Node Addition Request Reject to the first RAN node, such as e.g. the MN, thereby preventing the DC to be performed, even though a redundant transmission may be given a high priority. According to one embodiment the second RAN node 111, such as e.g. the SN, may store the request for SN node addition and when the situation has changed, such as e.g. when the resource is available again, the second RAN node 111, such as the SN, may initiate a confirmation to the first RAN node 110, such as the MN, to indicate that the previously rejected SN node addition may be performed.

In another embodiment, the second RAN node 111, such as the SN, may execute measures to enable a possibility to accept the request to add a redundant path, such as e.g. handover of other UEs, PDU Sessions or QoS Flows.

Figure 8 shows a new class 1 message, herein referred to as XnAP: Addition Request (for early failed), allowing the second RAN node 111, such as the SN, to initiate the DC addition for the previously failed session. Class 1 message is a ping-pong message comprising a request and a response, whereas a class 2 message is a notification which does not require a response.

In another embodiment, the second Ran node 111, such as the SN, may recall the request from the first RAN node 110, such as the MN, and may notify the first RAN node 110, such as the MN, that it is available. The first RAN node 1110, such as the MN, may thereafter try to setup DC again. This may e.g. be performed by sending a class 2 notification indicating that the second RAN node 111, such as the SN, is available again.

In another embodiment, the RAN nodes, such as NG-RAN nodes, may periodically notify their neighbor nodes on their resource situation, particularly for the handling of redundant transmission. This may either be requested by another RAN node via signaling, or by configuration.

In another embodiment, the RAN nodes may poll (periodically or on demand) the other RAN nodes. In that case, the RAN node initiating the poll may store when and to which RAN node such polling is applicable. The RAN node receiving the request may send a failure cause code indicating that the current request has failed but that there may be a possibility to succeed later, or alternatively a cause code indicating that it will not accept the request later either.

To further improve the handling of redundant transmission, in one embodiment the RAN node, such as the NG-RAN node, may, during NG setup, provide a candidate list to the 5GC as its potential redundancy partner. This information may be obtained by the RAN node via confirmation, via Automatic Neighbor Relation (ANR), or by other means. This may be performed by any RAN node such as e.g. the MN, the SN, the source NG-RAN node and/or the target NG-RAN node.

According to one embodiment a candidate cell or Node list may be comprised in a NG setup response to indicate a possible partner node for setting up a redundant transmission.

According to another embodiment the RAN node may, during NG setup, pre-allocate SN nodes comprising DownLink (DL) Tunnel Endpoint Identifiers (TEIDs) and may send them to the 5GC. The SN side TEIDs may be pre-allocated by the MN, or may be pre-allocated by the SN and may be sent to the MN during e.g. Xn Setup.

**Figure 9** illustrates some exemplary method actions performed by the first RAN node 110, such as e.g. a Master Node (MN) or a primary NG-RAN node, for handling DC in redundancy transmission in the wireless communications network 100. A first PDU session and/or QoS flow is established from the UE 120 to the CN 130 via the first RAN node 110.

**Action 901:** The first RAN node 110 determines to set up the second PDU session and/or QoS flow between the UE 120 and the CN 130 via the second RAN node 111, such as e.g. a Secondary Node (SN) or a secondary NG-RAN node.
**Action 902:** The first RAN node 110 further sends, to the second RAN node 111, a request for setup of the second PDU session and/or QoS flow. The request comprise an indication that the second PDU session and/or QoS flow are setup for redundancy transmission. The indication may be referred to as a "Redundant Transmission Indication". The indication that the second PDU session and/or QoS flow is set up for redundancy transmission, allows the second RAN node to apply actions suited for redundancy transmission in its handling of the second PDU session and/or QoS flow. As an example, the second RAN node may e.g. refrain from use of split bearers for the second PDU session and/or QoS flow.

The first RAN node 110 may further send, to the second RAN node 111, an indication indicating that the setup of the second PDU session and/or QoS flow for redundancy transmission are to be prioritized.

The first RAN node 110 may further send, to the second RAN node 111, an indication preventing the second RAN node 111 from initiating a change of secondary node RAN. By preventing a change of secondary RAN node, the added latency caused by such a change can be avoided when low latency and/or low jitter is important.

The first RAN node 110 may further send, to the second RAN node 111, an indication indicating resources used by the first RAN node 110, such as e.g. cell identifiers and/or frequency carrier identifiers, informing the second RAN node 111 not to use the indicated resources.

**Figure 10** illustrates some exemplary method actions performed by the second RAN node 111, such as e.g. a New Generation Radio Access Network, NG-RAN, node, e.g. a Secondary node (SN), for handling DC in redundancy transmission in the wireless communications network 100. A first PDU session and/or QoS flow is established from the UE 120 to the CN 130 via the first RAN node 110.

**Action 1001:** The second RAN node 111 receives, from the first RAN node 110, a request for setup of a second PDU session and/or QoS flow. The request comprises an indication that the second PDU session and/or QoS flow are setup for redundancy transmission. The indication may be referred to as a "Redundant Transmission Indication". The step of receiving 1001 may be performed by a processor and/or a processing unit and/or a receiving unit comprised in the second RAN node 111.

The second RAN node 111 may further receive, from the first RAN node 110, an indication indicating that the setup of the second PDU session and/or QoS flows for redundancy transmission are to be prioritized.

The second RAN node 111 may further receive, from the first RAN node 110, an indication preventing the second RAN node 111 from initiating a change of secondary RAN node.

The second RAN node 111 may further receive, from the first RAN node 110, an indication indicating resources used by the primary RAN node 110, such as e.g. cell identifiers and/or frequency carrier identifiers, informing the second RAN node 111 not to use the indicated resources.

**Action 1002:** The second RAN node 111 may further set up, which may also be referred to as establish, the second PDU session and/or QoS flow for redundancy transmission, based on the received indication or indications. The step of setting up or establishing may be performed by a processor and/or a processing unit and/or a setup unit and/or an establishing unit comprised in the second RAN node 111.

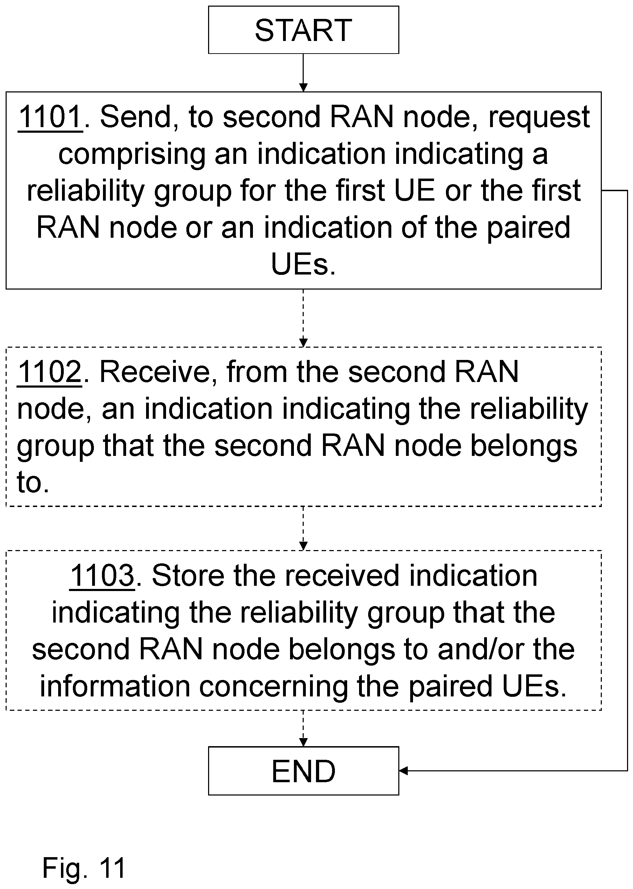

**Figure 11** illustrates exemplary method actions performed by the first RAN node 110, for handling dual connectivity (DC) in redundancy transmission in the wireless communications network 100, according to some embodiments described herein relating to the solution to prevent setting a DC operation or a hand over to a RAN node which is not suitable for handling the redundant transmission (e.g. a node that is already serving one UE out of the two paired UEs). A first PDU session and/or a QoS flow is established from a first UE 120 to the CN 130 via the first RAN node 110. The first UE is paired with a second UE, and the first and the second UEs are comprised in a single device, such as e.g. a wireless device (WD).

**Action 1101:** The first RAN node 110, such as the MN or a source NG-RAN node, may send, to a second RAN node 111, such as e.g. the SN or the target NG-RAN node, a request comprising an indication indicating a reliability group for the first UE or the first RAN node 110 or an indication of the paired UEs. This step may be performed by a processor and/or a processing unit and/or a sending unit comprised in the first RAN node 110, such as the MN or a source NG-RAN node.

The request sent to the second RAN node 111 is a DC request, such as e.g. a S-NG-RAN node addition and/or Modification message, or a handover request, such as e.g. a handover over Xn or N2.

**Action 1102:** The first RAN node 110 may receive, from the second RAN node, such as e.g. the SN or the target NG-RAN node, an indication indicating the reliability group that the second RAN node 111 belongs to and/or information concerning the paired UEs. The step of receiving may be performed by a processor and/or a processing unit and/or a receiving unit comprised in the first RAN node 110, such as the MN or the source NG-RAN node.

**Action 1103:** The first RAN node 110 may store the received indication indicating the reliability group that the second RAN node 111 belongs to and/or the information concerning the paired UEs. The step of storing may be performed by a processor and/or a processing unit and/or a storing unit and/or a memory comprised in the first RAN node 110, such as e.g. the MN or the source NG-RAN node.

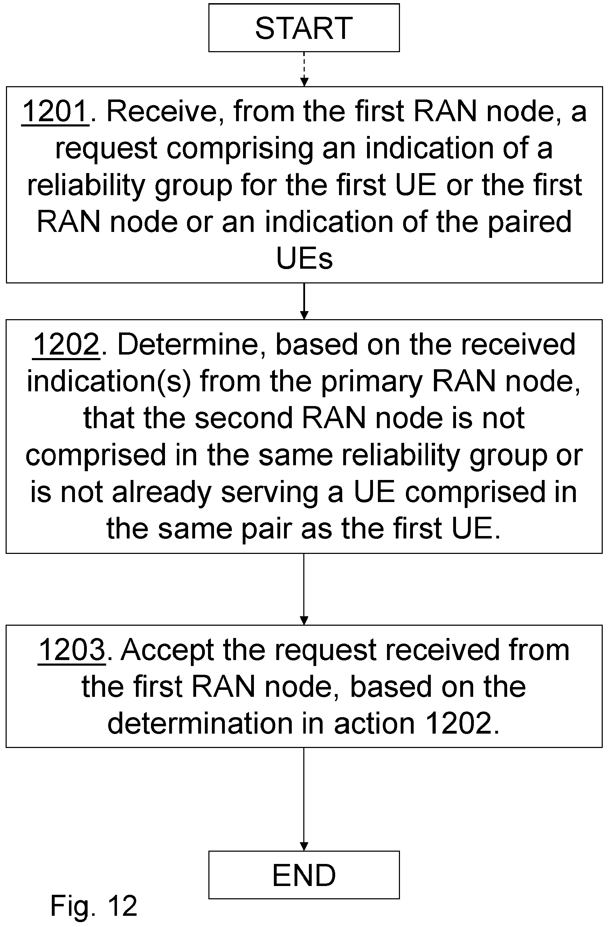

**Figure 12** illustrates exemplary method actions performed by the second RAN node 111, such as e.g. a Secondary node (SN) or a target NG-RAN node, for handling DC in redundancy transmission in a wireless communications network, according to some embodiments described herein relating to the solution to prevent setting a DC operation or a hand over to a RAN node which is not suitable for handling the redundant transmission (e.g. a node that is already serving one UE out of the two paired UEs). A first PDU session and/or a QoS flow is established from a first UE 120 to the CN 130 via the first RAN node 110. The first UE is paired with a second UE, and the first and the second UEs are comprised in a single device, such as e.g. a wireless device (WD).

**Action 1201:** The second RAN node 111 may receive, from the first RAN node 110, such as e.g. the MN or the source NG-RAN node, a request comprising an indication of a reliability group for the first UE or the first RAN node 110 or an indication of the paired UEs. The step of receiving 1201 may be performed by a processor and/or a processing unit and/or a receiving unit comprised in the second RAN node 111, such as the SN or the target NG-RAN node.

**Action 1202:** The second RAN node 111 may determine, based on the received indication(s) from the primary RAN node 110, that the second RAN node 111 is not comprised in the same reliability group or is not already serving a UE comprised in the same pair as the first UE. The step of determining 1202 may be performed by a processor and/or a processing unit and/or a determining unit comprised in the second RAN node 111, such as e.g. the SN and or the source NG-RAN node.

**Action 1203:** The second RAN node 111 may accept the request received from the first RAN node 110, based on the determination in action 1202. The step of accepting the request may be performed by a processor and/or a processing unit and/or a setup unit and/or an establishing unit and/or a handover unit comprised in the second RAN node 111, such as e.g. the SN and or the source NG-RAN node.

**Action 1204:** The second RAN node 111 may send, to the first RAN node 110, such as e.g. the MN or the source NG-RAN node, an indication indicating the reliability group that the second RAN node 111 belongs to and/or information concerning the paired UEs. The step of receiving may be performed by a processor and/or a processing unit and/or a sending unit comprised in the second RAN node 111, such as the SN or the target NG-RAN node.

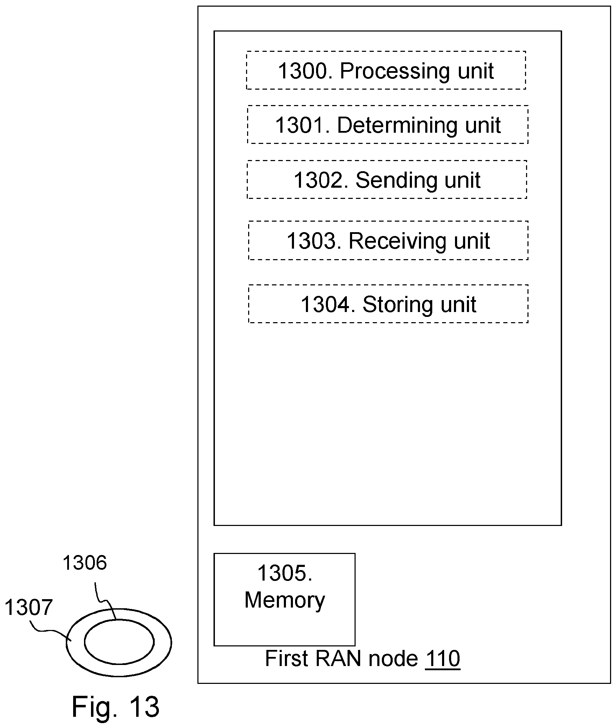

**Figure 13** is a block diagram depicting the first RAN node 110 for handling dual connectivity (DC) in redundancy transmission in a wireless communications network 100, according to the various aspects of embodiments described herein. The first RAN node 110 may comprise a processing unit 1300, such as e.g. one or more processors, a determining unit 1301, a sending unit 1302, a receiving unit 1303 and/or a storing unit 1304 as exemplifying hardware units configured to perform the methods as described herein for the first RAN node 110, such as e.g. the MN or the source NG-RAN node.

The first RAN node 110 may be configured to, e.g. by means of the processor and/or the processing unit 1300 and/or the determining unit 1301 being configured to, determine to set up the second PDU session and/or QoS flow between the UE 120 and the CN 130 via a second RAN node 111, such as the SN or the secondary NG-RAN node.

The first RAN node 110 may further be configured to, e.g. by means of the processor and/or the processing unit 1300 and/or the sending unit 1302 being configured to, send, to the second RAN node 111, the request for setup of the second PDU session and/or QoS flow.

The first RAN node 110 is configured to, e.g. by means of the processor and/or the processing unit 1300 and/or the sending unit 1302 being configured to, send the request comprising the indication that the second PDU session and/or QoS flow are setup for redundancy transmission. The indication may be referred to as a "Redundant Transmission Indication".

The first RAN node 110 may further be configured to, e.g. by means of the processor and/or the processing unit 1300 and/or the sending unit 1302 being configured to, send, to the second RAN node 111, the indication indicating that the setup of the second PDU session and/or QoS flow for redundancy transmission are to be prioritized.

The first RAN node 110 may further be configured to, e.g. by means of the processor and/or the processing unit 1300 and/or the sending unit 1302 being configured to, send, to the second RAN node 111, the indication preventing the second RAN node 111 from initiating a change of secondary RAN node .

The first RAN node 110 may further be configured to, e.g. by means of the processor and/or the processing unit 1300 and/or the sending unit 1302 being configured to, send, to the second RAN node 111, the indication indicating resources used by the first RAN node 110, such as e.g. cell identifiers and/or frequency carrier identifiers, informing the second RAN node 111 not to use the indicated resources.

The first RAN node 110, such as the MN or a source NG-RAN node, may further be configured to, e.g. by means of the processor and/or the processing unit 1300 and/or the sending unit 1302 being configured to, send, to the second RAN node 111, such as e.g. the SN or the target NG-RAN node, the request comprising an indication indicating a reliability group for the first UE or the first RAN node 110 or an indication of the paired UEs. This step may be performed by a processor and/or a processing unit and/or a sending unit comprised in the first RAN node 110, such as the MN or a source NG-RAN node.

The first RAN node 110 may further be configured to, e.g. by means of the processor and/or the processing unit 1300 and/or the sending unit 1302 being configured to, send a DC request, such as e.g. a S-NG-RAN node addition and/or Modification message, or a handover request, such as e.g. a handover over Xn or N2.

The first RAN node 110 may further be configured to, e.g. by means of the processor and/or the processing unit 1300 and/or the receiving unit 1303 being configured to, receive, from the second RAN node 111, such as e.g. the SN or the target NG-RAN node, an indication indicating the reliability group that the second RAN node 111 belongs to and/or information concerning the paired UEs.

The first RAN node 110 may further be configured to, e.g. by means of the processor and/or the processing unit 1300 and/or the storing unit 1304 and/or a memory 1305 being configured to, store the received indication indicating the reliability group that the second RAN node 111 belongs to and/or the information concerning the paired UEs. The step of storing may be performed by a processor and/or a processing unit 1300 and/or a storing unit 1304 and/or a memory 1305 comprised in the first RAN node 110, such as e.g. the MN or the source NG-RAN node.

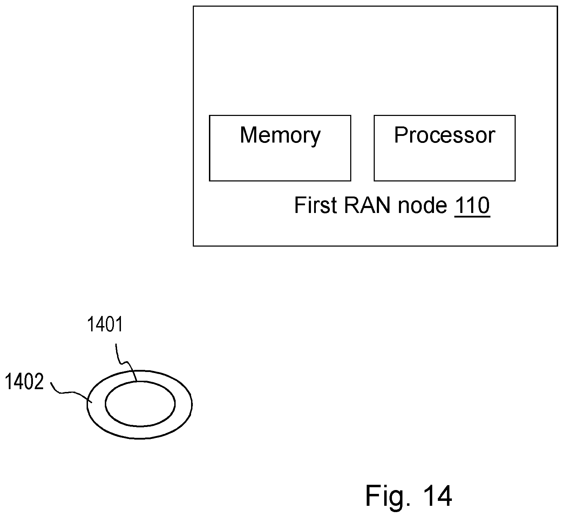

The embodiments herein may be implemented through a respective processor or one or more processors of a processing circuitry in the first RAN node 110 as depicted in Figure 14, which processing circuitry is configured to perform the method actions according to Figure 9 and/or 11 and the embodiments described above for the first RAN node 110, the MN and/or the source NG-Ran node.

The embodiments may be performed by the processor together with respective computer program code for performing the functions and actions of the embodiments herein. The program code mentioned above may also be provided as a computer program product, for instance in the form of a data carrier carrying computer program code for performing the embodiments herein when being loaded into the first RAN node 110. One such carrier may be in the form of a CD ROM disc. It is however feasible with other data carriers such as e.g. a memory stick. The computer program code may furthermore be provided as pure program code on a server and downloaded to the first RAN node 110.

The first RAN node 110 may further comprise a memory 1305. The memory may comprise one or more memory units to be used to store data on, such as the PUSCH resource table, software, patches, system information (SI), configurations, diagnostic data, performance data and/or applications to perform the methods disclosed herein when being executed, and similar.

The method according to the embodiments described herein for the first RAN node 110 may be implemented by means of e.g. a computer program product 1306, 1401 or a computer program, comprising instructions, i.e., software code portions, which, when executed on at least one processor, cause at least one processor to carry out the actions described herein, as performed by the first RAN node 110. The computer program product 1306, 1401 may be stored on a computer-readable storage medium 1307, 1402, e.g. a disc or similar. The computer-readable storage medium 1307, 1402, having stored thereon the computer program, may comprise instructions which, when executed on at least one processor, cause the at least one processor to carry out the actions described herein, as performed by the first RAN node 110, the MN and/or the source NG-RAN node. In some embodiments, the computer-readable storage medium may be a non-transitory computer-readable storage medium. The computer program may also be comprised on a carrier, wherein the carrier is one of an electronic signal, optical signal, radio signal, or a computer readable storage medium.

As will be readily understood by those familiar with communications design, that functions means or units may be implemented using digital logic and/or one or more microcontrollers, microprocessors, or other digital hardware. In some embodiments, several or all of the various functions may be implemented together, such as in a single application-specific integrated circuit (ASIC), or in two or more separate devices with appropriate hardware and/or software interfaces between them. Several of the functions may be implemented on a processor shared with other functional components of a RAN node.

Alternatively, several of the functional elements of the processing means discussed may be provided through the use of dedicated hardware, while others are provided with hardware for executing software, in association with the appropriate software or firmware. Thus, the term "processor" or "controller" as used herein does not exclusively refer to hardware capable of executing software and may implicitly include, without limitation, digital signal processor (DSP) hardware, read-only memory (ROM) for storing software, random-access memory for storing software and/or program or application data, and non-volatile memory. Other hardware, conventional and/or custom, may also be included. Designers of network nodes or devices will appreciate the cost, performance, and maintenance trade-offs inherent in these design choices.

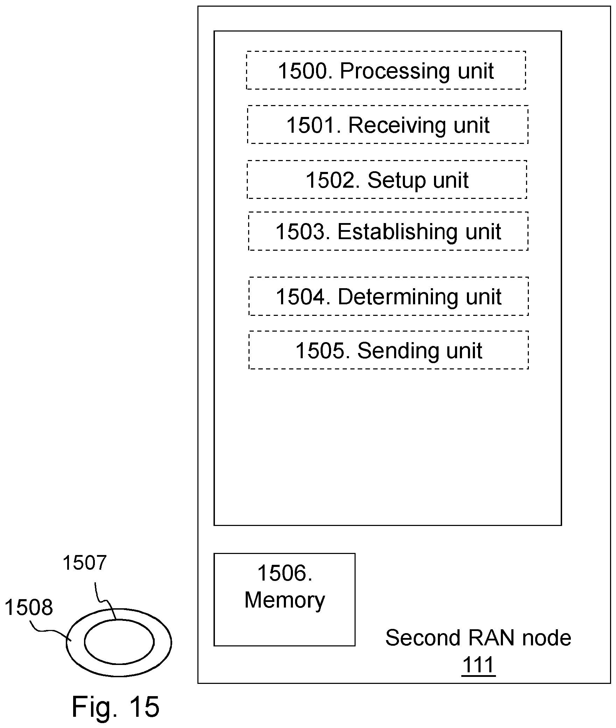

**Figure 15** is a block diagram depicting the second RAN node 111, such as e.g. a SN or a target NG-RAN node for handling dual connectivity (DC) in redundancy transmission in a wireless communications network 100, according to the various aspects of embodiments described herein. The second RAN node 111 may comprise a processing unit 1500, such as e.g. one or more processors, a receiving unit 1501, a setup unit 1502, an establishing unit 1503, a determining unit 1504 and/or a sending unit 1505 as exemplifying hardware units configured to perform the method as described herein for the second RAN node 111. A first PDU session and/or a QoS flow is established from the UE 120 to the CN 130 via the first RAN node 110. The UE may be a first UE that may be paired with a second UE, and the first and the second UEs may be comprised in a single device, such as e.g. a wireless device (WD).

The second RAN node may comprise a processor and a memory, the memory containing instructions executable by the processor whereby the second RAN node 111 is configured to receive, from the first RAN node 110, the request for setup of the second PDU session and/or QoS flow. The request comprises the indication that the second PDU session and/or QoS flow are setup for redundancy transmission. The second RAN node 111 may be configured to receive, from the first RAN node 110, the indication indicating that the setup of the second PDU session and/or QoS flow for redundancy transmission is to be prioritized. The second RAN node 111 may be configured to receive, from the first RAN node 110, the indication preventing the second RAN node 111 from initiating a change of secondary RAN node. The second RAN node 111 may be configured to receive, from the first RAN node 110, the indication indicating resources used by the first RAN node 110 for informing the second RAN node 111 not to use the indicated resources. The second RAN node 111 may be configured to set-up or establish the second PDU session and/or QoS flow for redundancy transmission, based on the received indication or indications. The second RAN node may be a secondary node, and/or a new generation RAN node.

The second RAN node 111 may be configured to, e.g. by means of the processor and/or the processing unit 1500 and/or the receiving unit 1501 being configured to, receive, from the first RAN node 110, such as e.g. the MN or the source NG-RAN node, a request comprising an indication of a reliability group for the first UE or the first RAN node 110 or an indication of the paired UEs. The step of receiving 1201 may be performed by a processor and/or a processing unit and/or a receiving unit comprised in the second RAN node 111, such as the SN or the target NG-RAN node.

The second RAN node 111 may further be configured to, e.g. by means of the processor and/or the processing unit 1500 and/or the determining unit 1502 being configured to, determine, based on the received indication(s) from the primary RAN node 110, that the second RAN node 111 is not comprised in the same reliability group or is not already serving a UE comprised in the same pair as the first UE. The step of determining 1202 may be performed by a processor and/or a processing unit and/or a determining unit comprised in the second RAN node 111, such as e.g. the SN and or the source NG-RAN node.

The second RAN node 111 may be configured to, e.g. by means of the processor and/or the processing unit 1500 and/or the setup unit 1502 and/or the establishing unit 1504 being configured to, accept the request received from the first RAN node 110, based on the determination that the second RAN node 111 is not comprised in the same reliability group or is not already serving a UE comprised in the same pair as the first UE. The step of accepting the request may be performed by a processor and/or a processing unit and/or a setup unit and/or an establishing unit and/or a handover unit comprised in the second RAN node 111, such as e.g. the SN and or the source NG-RAN node.

The second RAN node 111 may further be configured to, e.g. by means of the processor and/or the processing unit 1500 and/or the sending unit 1505 being configured to, send, to the first RAN node 110, such as e.g. the MN or the source NG-RAN node, an indication indicating the reliability group that the second RAN node 111 belongs to and/or information concerning the paired UEs. The step of receiving may be performed by a processor and/or a processing unit and/or a sending unit comprised in the second RAN node 111, such as the SN or the target NG-RAN node.

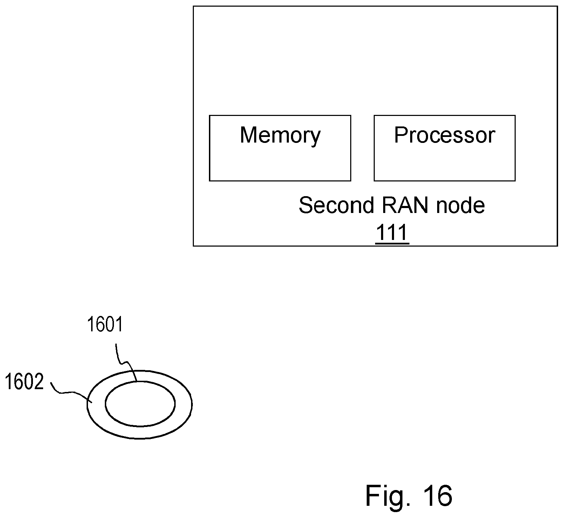

Embodiments herein may be implemented through a respective processor or one or more processors of a processing circuitry in the second RAN node 111 as depicted in **Figure 16****,** which processing circuitry is configured to perform the method actions according to Figure 10 and/or 12 and the embodiments described above for the second RAN node 111, the SN and/or the target NG-RAN node.

The embodiments may be performed by the processor together with respective computer program code for performing the functions and actions of the embodiments herein. The program code mentioned above may also be provided as a computer program product, for instance in the form of a data carrier carrying computer program code for performing the embodiments herein when being loaded into the second RAN node 111. One such carrier may be in the form of a CD ROM disc. It is however feasible with other data carriers such as e.g. a memory stick. The computer program code may furthermore be provided as pure program code on a server and downloaded to the second RAN node 111.

The second RAN node 111 may further comprise a memory 1506. The memory may comprise one or more memory units to be used to store data on, such as software, patches, system information, configurations, diagnostic data, performance data and/or applications to perform the methods disclosed herein when being executed, and similar.

The method according to the embodiments described herein for the second RAN node 111 may be implemented by means of e.g. a computer program product 1507, 1601 or a computer program, comprising instructions, i.e., software code portions, which, when executed on at least one processor, cause at least one processor to carry out the actions described herein, as performed by the second RAN node 111. The computer program product 1507, 1601 may be stored on a computer-readable storage medium 1508, 1602, e.g. a disc or similar. The computer-readable storage medium 1508, 1602, having stored thereon the computer program, may comprise instructions which, when executed on at least one processor, cause the at least one processor to carry out the actions described herein, as performed by the second RAN node 111. In some embodiments, the computer-readable storage medium may be a non-transitory computer-readable storage medium. The computer program may also be comprised on a carrier, wherein the carrier is one of an electronic signal, optical signal, radio signal, or a computer readable storage medium.

As will be readily understood by those familiar with communications design, that functions means or units may be implemented using digital logic and/or one or more microcontrollers, microprocessors, or other digital hardware. In some embodiments, several or all of the various functions may be implemented together, such as in a single application-specific integrated circuit (ASIC), or in two or more separate devices with appropriate hardware and/or software interfaces between them. Several of the functions may be implemented on a processor shared with other functional components of a network node.

Alternatively, several of the functional elements of the processing means discussed may be provided through the use of dedicated hardware, while others are provided with hardware for executing software, in association with the appropriate software or firmware. Thus, the term "processor" or "controller" as used herein does not exclusively refer to hardware capable of executing software and may implicitly include, without limitation, digital signal processor (DSP) hardware, read-only memory (ROM) for storing software, random-access memory for storing software and/or program or application data, and non-volatile memory. Other hardware, conventional and/or custom, may also be included. Designers of network nodes or devices will appreciate the cost, performance, and maintenance trade-offs inherent in these design choices.

The second RAN node 111, described in the embodiments herein may also be implemented in a cloud. Although the method actions performed by the second RAN node 111 herein are discussed in the context of a radio network node, the method may also be performed by a core network node or a distributed node comprised in a first cloud, such as e.g. a server and/or a datacenter. The method actions may e.g. be performed by a logical function, which may be a centralized service hosted on the core network node or the distributed node.

It shall be noted that the nodes mentioned herein may be arranged as separate nodes or may be collocated within one or more nodes in the communications network. When a plurality of nodes are collocated in one node, the single node may be configured to perform the actions of each of the collocated nodes.

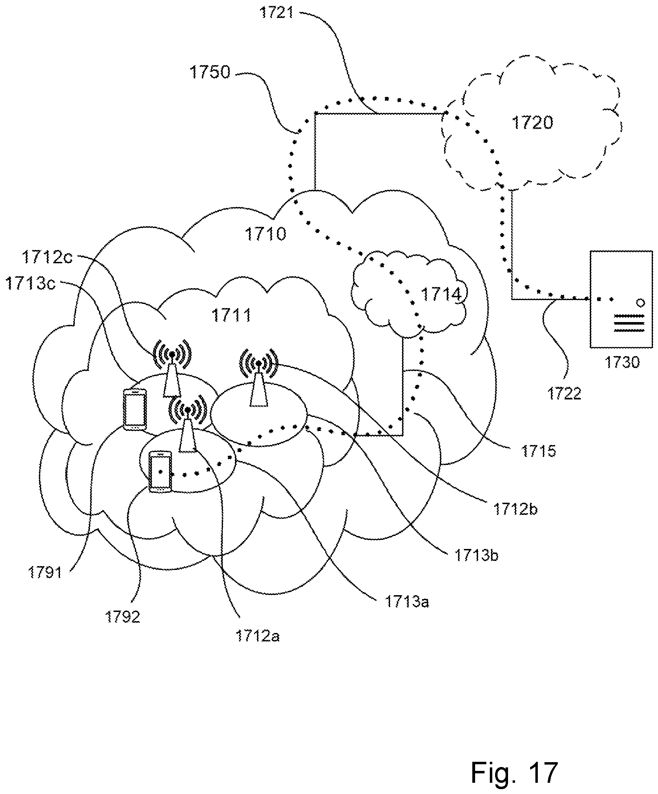

With reference to **Figure 17****,** in accordance with an embodiment, a communication system includes telecommunication network 1710, such as a 3GPP-type cellular network, which comprises access network 1711, such as a radio access network, and core network 1714. Access network 1711 comprises a plurality of base stations 1712a, 1712b, 1712c, e.g. the first RAN node 110 and/or the second RAN node 111, such as NBs, eNBs, gNBs or other types of wireless access points, each defining a corresponding coverage area 1713a, 1713b, 1713c. Each base station 1712a, 1712b, 1712c is connectable to core network 1714 over a wired or wireless connection 1715. A first UE 1791, such as the UE 120, located in coverage area 1713c is configured to wirelessly connect to, or be paged by, the corresponding base station 1712c. A second UE 1792 in coverage area 1713a is wirelessly connectable to the corresponding base station 1712a. While a plurality of UEs 1791, 1792 are illustrated in this example, the disclosed embodiments are equally applicable to a situation where a sole UE is in the coverage area or where a sole UE is connecting to the corresponding base station 1712.

Telecommunication network 1710 is itself connected to host computer 1730, which may be embodied in the hardware and/or software of a standalone server, a cloud-implemented server, a distributed server or as processing resources in a server farm. Host computer 1730 may be under the ownership or control of a service provider, or may be operated by the service provider or on behalf of the service provider. Connections 1721 and 1722 between telecommunication network 1710 and host computer 1730 may extend directly from core network 1714 to host computer 1730 or may go via an optional intermediate network 1720. Intermediate network 1720 may be one of, or a combination of more than one of, a public, private or hosted network; intermediate network 1720, if any, may be a backbone network or the Internet; in particular, intermediate network 1720 may comprise two or more sub-networks (not shown).

The communication system of Figure 17 as a whole enables connectivity between the connected UEs 1791, 1792 and host computer 1730. The connectivity may be described as an over-the-top (OTT) connection 1750. Host computer 1730 and the connected UEs 1791, 1792 are configured to communicate data and/or signaling via OTT connection 1750, using access network 1711, core network 1714, any intermediate network 1720 and possible further infrastructure (not shown) as intermediaries. OTT connection 1750 may be transparent in the sense that the participating communication devices through which OTT connection 1750 passes are unaware of routing of uplink (UL) and downlink (DL) communications. For example, base station 1712 may not or need not be informed about the past routing of an incoming downlink communication with data originating from host computer 1730 to be forwarded (e.g., handed over) to a connected UE 1791. Similarly, base station 1712 need not be aware of the future routing of an outgoing uplink communication originating from the UE 1791 towards the host computer 1730.

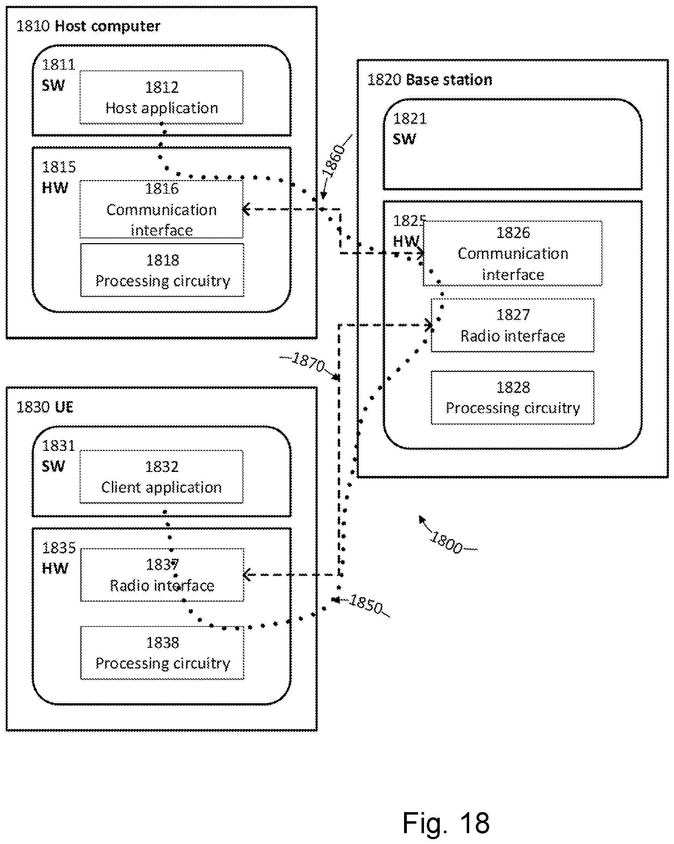

Example implementations, in accordance with an embodiment, of the UE, base station and host computer discussed in the preceding paragraphs will now be described with reference to **Figure 18****.** In communication system 1800, host computer 1810 comprises hardware 1815 including communication interface 1816 configured to set up and maintain a wired or wireless connection with an interface of a different communication device of communication system 1800. Host computer 1810 further comprises processing circuitry 1818, which may have storage and/or processing capabilities. In particular, processing circuitry 1818 may comprise one or more programmable processors, application-specific integrated circuits, field programmable gate arrays or combinations of these (not shown) adapted to execute instructions. Host computer 1810 further comprises software 1811, which is stored in or accessible by host computer 1810 and executable by processing circuitry 1818. Software 1811 includes host application 1812. Host application 1812 may be operable to provide a service to a remote user, such as UE 1830 connecting via OTT connection 1850 terminating at UE 1830 and host computer 1810. In providing the service to the remote user, host application 1812 may provide user data which is transmitted using OTT connection 1850.

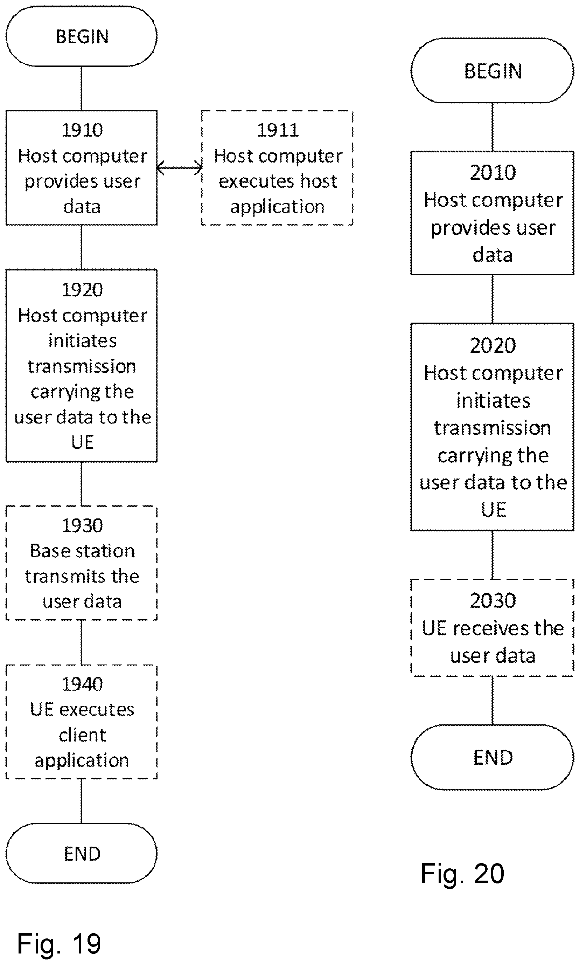

Communication system 1800 further includes base station 1820 provided in a telecommunication system and comprising hardware 1825 enabling it to communicate with host computer 1810 and with UE 1830. Hardware 1825 may include communication interface 1826 for setting up and maintaining a wired or wireless connection with an interface of a different communication device of communication system 1800, as well as radio interface 1827 for setting up and maintaining at least wireless connection 1870 with UE 1830 located in a coverage area (not shown in Figure 20) served by base station 1820. Communication interface 1826 may be configured to facilitate connection 1860 to host computer 1810. Connection 1860 may be direct or it may pass through a core network (not shown in Figure 20) of the telecommunication system and/or through one or more intermediate networks outside the telecommunication system. In the embodiment shown, hardware 1825 of base station 1820 further includes processing circuitry 1828, which may comprise one or more programmable processors, application-specific integrated circuits, field programmable gate arrays or combinations of these (not shown) adapted to execute instructions. Base station 1820 further has software 1821 stored internally or accessible via an external connection.

Communication system 1800 further includes UE 1830 already referred to. Its hardware 1835 may include radio interface 1837 configured to set up and maintain wireless connection 1870 with a base station serving a coverage area in which UE 1830 is currently located. Hardware 1835 of UE 1830 further includes processing circuitry 1838, which may comprise one or more programmable processors, application-specific integrated circuits, field programmable gate arrays or combinations of these (not shown) adapted to execute instructions. UE 1830 further comprises software 1831, which is stored in or accessible by UE 1830 and executable by processing circuitry 1838. Software 1831 includes client application 1832. Client application 1832 may be operable to provide a service to a human or non-human user via UE 1830, with the support of host computer 1810. In host computer 1810, an executing host application 1812 may communicate with the executing client application 1832 via OTT connection 1850 terminating at UE 1830 and host computer 1810. In providing the service to the user, client application 1832 may receive request data from host application 1812 and provide user data in response to the request data. OTT connection 1850 may transfer both the request data and the user data. Client application 1832 may interact with the user to generate the user data that it provides.

It is noted that host computer 1810, base station 1820 and UE 1830 illustrated in Figure 18 may be similar or identical to host computer 1730, one of base stations 1712a, 1712b, 1712c and one of UEs 1791, 1792 of Figure 17, respectively. This is to say, the inner workings of these entities may be as shown in Figure 18 and independently, the surrounding network topology may be that of Figure 17.

In Figure 18, OTT connection 1850 has been drawn abstractly to illustrate the communication between host computer 1810 and UE 1830 via base station 1820, without explicit reference to any intermediary devices and the precise routing of messages via these devices. Network infrastructure may determine the routing, which it may be configured to hide from UE 1830 or from the service provider operating host computer 1810, or both. While OTT connection 1850 is active, the network infrastructure may further take decisions by which it dynamically changes the routing (e.g., on the basis of load balancing consideration or reconfiguration of the network).

Wireless connection 1870 between UE 1830 and base station 1820 is in accordance with the teachings of the embodiments described throughout this disclosure. One or more of the various embodiments improve the performance of OTT services provided to UE 1830 using OTT connection 1850, in which wireless connection 1870 forms the last segment. More precisely, the teachings of these embodiments may improve the transmission redundancy and thereby provide benefits such as improved stability and reliability of the communications network, especially an improved reliability of the connectivity between an application server and a device, such as a C-MTC device.

A measurement procedure may be provided for the purpose of monitoring data rate, latency and other factors on which the one or more embodiments improve. There may further be an optional network functionality for reconfiguring OTT connection 1850 between host computer 1810 and UE 1830, in response to variations in the measurement results. The measurement procedure and/or the network functionality for reconfiguring OTT connection 1850 may be implemented in software 1811 and hardware 1815 of host computer 1810 or in software 1831 and hardware 1835 of UE 1830, or both. In embodiments, sensors (not shown) may be deployed in or in association with communication devices through which OTT connection 1850 passes; the sensors may participate in the measurement procedure by supplying values of the monitored quantities exemplified above, or supplying values of other physical quantities from which software 1811, 1831 may compute or estimate the monitored quantities. The reconfiguring of OTT connection 1850 may include message format, retransmission settings, preferred routing etc.; the reconfiguring need not affect base station 1820, and it may be unknown or imperceptible to base station 1820. Such procedures and functionalities may be known and practiced in the art. In certain embodiments, measurements may involve proprietary UE signaling facilitating host computer 1810's measurements of throughput, propagation times, latency and the like. The measurements may be implemented in that software 1811 and 1831 causes messages to be transmitted, in particular empty or 'dummy' messages, using OTT connection 1850 while it monitors propagation times, errors etc.

**Figure 19** is a flowchart illustrating a method implemented in a communication system, in accordance with one embodiment. The communication system includes a host computer, a base station and a UE which may be those described with reference to Figures 17 and 18. For simplicity of the present disclosure, only drawing references to Figure 19 will be included in this section. In step 1910, the host computer provides user data. In substep 1911 (which may be optional) of step 1910, the host computer provides the user data by executing a host application. In step 1920, the host computer initiates a transmission carrying the user data to the UE. In step 1930 (which may be optional), the base station transmits to the UE the user data which was carried in the transmission that the host computer initiated, in accordance with the teachings of the embodiments described throughout this disclosure. In step 1940 (which may also be optional), the UE executes a client application associated with the host application executed by the host computer.

**Figure 20** is a flowchart illustrating a method implemented in a communication system, in accordance with one embodiment. The communication system includes a host computer, a base station and a UE which may be those described with reference to Figures 17 and 18. For simplicity of the present disclosure, only drawing references to Figure 20 will be included in this section. In step 2010 of the method, the host computer provides user data. In an optional substep (not shown) the host computer provides the user data by executing a host application. In step 2020, the host computer initiates a transmission carrying the user data to the UE. The transmission may pass via the base station, in accordance with the teachings of the embodiments described throughout this disclosure. In step 2030 (which may be optional), the UE receives the user data carried in the transmission.

**Figure 14** is a flowchart illustrating a method implemented in a communication system, in accordance with one embodiment. The communication system includes a host computer, a base station and a UE which may be those described with reference to Figures 17 and 18. For simplicity of the present disclosure, only drawing references to Figure 14 will be included in this section. In step 1410 (which may be optional), the UE receives input data provided by the host computer. Additionally or alternatively, in step 1420, the UE provides user data. In substep 1421 (which may be optional) of step 1420, the UE provides the user data by executing a client application. In substep 1411 (which may be optional) of step 1410, the UE executes a client application which provides the user data in reaction to the received input data provided by the host computer. In providing the user data, the executed client application may further consider user input received from the user. Regardless of the specific manner in which the user data was provided, the UE initiates, in substep 1430 (which may be optional), transmission of the user data to the host computer. In step 1440 of the method, the host computer receives the user data transmitted from the UE, in accordance with the teachings of the embodiments described throughout this disclosure.

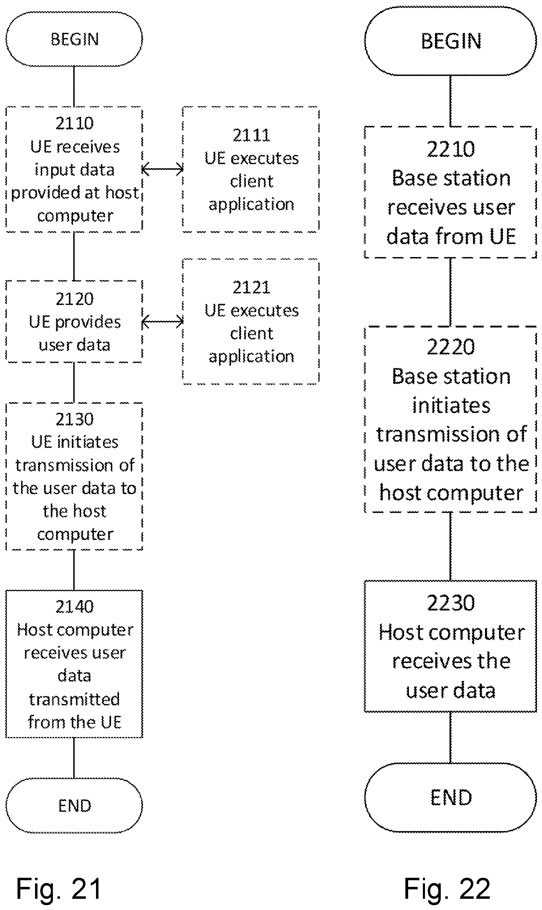

**Figure 22** is a flowchart illustrating a method implemented in a communication system, in accordance with one embodiment. The communication system includes a host computer, a base station and a UE which may be those described with reference to Figures 17 and 18. For simplicity of the present disclosure, only drawing references to Figure 22 will be included in this section. In step 2210 (which may be optional), in accordance with the teachings of the embodiments described throughout this disclosure, the base station receives user data from the UE. In step 2220 (which may be optional), the base station initiates transmission of the received user data to the host computer. In step 2230 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

### Some abbreviations:

| Abbreviation | Explanation |
|---|---|
| UPF | User Plane Function |
| DC | Dual Connectivity |
| NR | New Radio, 5G |
| 5GC | 5G Core |
| M-NG-RAN node | Master NG-RAN node |
| S-NG-RAN node | Secondary NG-RAN node |
| SN | Secondary Node (S-NG-RAN node) |
| MN | Master Node (M-NG-RAN node) |
| MCG | Master Cell Group |
| SCG | Second Cell Group |
| C-MTC | Critical Machine Type of Communication |
| MN terminated bearer | in MR-DC, a radio bearer for which PDCP is located in the MN |
| SN terminated bearer | in MR-DC, a radio bearer for which PDCP is located in the SN. |
| MCG Bearer | in MR-DC, a radio bearer with an RLC bearer only in the MCG |
| SCG Bearer | in MR-DC, a radio bearer with an RLC bearer only in the SCG |
| Split Bearer | in MR-DC, a radio bearer with RLC bearers both in MCG and SCG |

## Claims

1. A method, performed by a first radio access network, RAN, node (110) for handling dual connectivity, DC, in redundancy transmission in a wireless communications network, wherein a first protocol data unit, PDU, session and/or quality of service, QoS, flow is established from a User Equipment, UE, (120) to a Core Network, CN, (130) via the first RAN node (110), the method comprising:
- determining (901) to set up a second PDU session and/or QoS flow between the UE and the CN via a second RAN node (111),
the method being **characterized by** further comprising:
- sending (902), to the second RAN node (111), a request for setup of the second PDU session and/or QoS flow, wherein the request comprises an indication that the second PDU session and/or QoS flow are setup for redundancy transmission.

2. The method according to claim 1, wherein the method further comprises:
- sending, to the second RAN node (111), an indication indicating that the setup of the second PDU session and/or QoS flow for redundancy transmission are to be prioritized.

3. The method according to any of the claims 1-2, wherein the method further comprises:
- sending, to the second RAN node (111), an indication preventing the second RAN node (111) from initiating a change of secondary RAN node.

4. The method according to any of the claims 1-3, wherein the method further comprises:
- sending, to the second RAN node (111), an indication indicating resources used by the first RAN node (110) for informing the second RAN node (111) not to use the indicated resources.

5. The method according to any of the claims 1-4, wherein the first RAN node is a master node and the second RAN node is a secondary RAN node.

6. The method according to any of the claims 1-5, wherein the first RAN node and the second RAN node are New Generation RAN, NG-RAN, nodes.

7. A method, performed by a second radio access network, RAN, node for handling dual connectivity, DC, in redundancy transmission in a wireless communications network, wherein a first protocol data unit, PDU, session and/or quality of service, QoS, flow is established from a User Equipment, UE, (120) to a Core Network, CN, (130) via a first RAN node (110), the method being **characterized by** comprising:
- receiving (1001), from the first RAN node (110), a request for setup of a second PDU session and/or QoS flow, wherein the request comprises an indication that the second PDU session and/or QoS flow are setup for redundancy transmission.

8. The method according to claim 7, wherein the method further comprises:
- receiving, from the first RAN node (110), an indication indicating that the setup of the second PDU session and/or QoS flow for redundancy transmission is to be prioritized.

9. The method according to any of the claims 7-8, wherein the method further comprises:
- receiving, from the first RAN node (110), an indication preventing the second RAN node (111) from initiating a change of secondary RAN node.

10. The method according to any of the claims 7-9, wherein the method further comprises:
- receiving, from the first RAN node (110), an indication indicating resources used by the first RAN node (110) for informing the second RAN node (111) not to use the indicated resources.

11. The method according to any of the claims 7-10, wherein the method further comprises:
- setting up or establishing (1002) the second PDU session and/or QoS flow for redundancy transmission, based on the received indication or indications.

12. The method according to any of the claims 7-11, wherein the first RAN node is a master node and the second RAN node is a secondary RAN node.

13. A first radio access network, RAN, node for handling dual connectivity, DC, in redundancy transmission in a wireless communications network, wherein a first protocol data unit, PDU, session and/or quality of service, QoS, flow is established from a User Equipment, UE, (120) to a Core Network, CN, (130) via the first RAN node (110), wherein the first RAN node is configured to perform any of the methods according to claim 1-6.

14. A second radio access network, RAN, node for handling dual connectivity, DC, in redundancy transmission in a wireless communications network, wherein a first protocol data unit, PDU, session and/or quality of service, QoS, flow is established from a User Equipment, UE, (120) to a Core Network, CN, (130) via a first RAN node (110), and wherein the second RAN node is configured to perform any of the methods according to claim 7-12.

15. A computer program comprising instructions, which when executed by a processor, causes the processor to perform actions according to any of the claims 1-12.

## Patentansprüche

1. Verfahren, das von einem ersten Funkzugangsnetzknoten, R_AN-Knoten, (110) durchgeführt wird, zum Handhaben von Dualkonnektivität, DC, bei Redundanzübertragung in einem drahtlosen Kommunikationsnetz, wobei eine erste Protokolldateneinheitssitzung, PDU-Sitzung, und/oder ein erster Dienstgüteablauf, QoS-Ablauf, von einer Benutzerausrüstung, UE, (120) zu einem Kernnetz, CN, (130) über den ersten RAN-Knoten (110) hergestellt wird, wobei das Verfahren Folgendes umfasst:
- Bestimmen (901), eine zweite PDU-Sitzung und/oder einen zweiten QoS-Ablauf zwischen der UE und dem CN über einen zweiten RAN-Knoten (111) einzurichten,wobei das Verfahren ferner **dadurch gekennzeichnet ist, dass** es Folgendes umfasst:
- Senden (902), an den zweiten RAN-Knoten (111), einer Anforderung zur Einrichtung der zweiten PDU-Sitzung und/oder des zweiten QoS-Ablaufs, wobei die Anforderung eine Angabe umfasst, dass die zweite PDU-Sitzung und/oder der zweite QoS-Ablauf für eine Redundanzübertragung eingerichtet sind.

2. Verfahren nach Anspruch 1, wobei das Verfahren ferner Folgendes umfasst:
- Senden, an den zweiten RAN-Knoten (111), einer Angabe, die angibt, dass die Einrichtung der zweiten PDU-Sitzung und/oder des zweiten QoS-Ablaufs für eine Redundanzübertragung zu priorisieren ist.

3. Verfahren nach einem der Ansprüche 1-2, wobei das Verfahren ferner Folgendes umfasst:
- Senden, an den zweiten RAN-Knoten (111), einer Angabe, die verhindert, dass der zweite RAN-Knoten (111) eine Änderung des sekundären RAN-Knotens einleitet.

4. Verfahren nach einem der Ansprüche 1-3, wobei das Verfahren ferner Folgendes umfasst:
- Senden, an den zweiten RAN-Knoten (111), einer Angabe, die von dem ersten RAN-Knoten (110) verwendete Ressourcen angibt, um den zweiten RAN-Knoten (111) darüber zu informieren, die angegebenen Ressourcen nicht zu verwenden.

5. Verfahren nach einem der Ansprüche 1-4, wobei der erste R_AN-Knoten ein Masterknoten ist und der zweite RAN-Knoten ein sekundärer RAN-Knoten ist.

6. Verfahren nach einem der Ansprüche 1-5, wobei der erste RAN-Knoten und der zweite RAN-Knoten New-Generation-RAN-Knoten, NG-RAN-Knoten, sind.

7. Verfahren, das von einem zweiten Funkzugangsnetzknoten, R_AN-Knoten, durchgeführt wird, zum Handhaben von Dualkonnektivität, DC, bei einer Redundanzübertragung in einem drahtlosen Kommunikationsnetz, wobei eine erste Protokolldateneinheitssitzung, PDU-Sitzung, und/oder ein erster Dienstgüteablauf, QoS-Ablauf, von einer Benutzerausrüstung, UE, (120) zu einem Kernnetz, CN, (130) über einen ersten RAN-Knoten (110) hergestellt wird, wobei das Verfahren **dadurch gekennzeichnet ist, dass** es Folgendes umfasst:
- Empfangen (1001), von dem ersten RAN-Knoten (110), einer Anforderung zur Einrichtung einer zweiten PDU-Sitzung und/oder eines zweiten QoS-Ablaufs, wobei die Anforderung eine Angabe umfasst, dass die zweite PDU-Sitzung und/oder der zweite QoS-Ablauf für eine Redundanzübertragung eingerichtet sind.

8. Verfahren nach Anspruch 7, wobei das Verfahren ferner Folgendes umfasst:
- Empfangen, von dem ersten RAN-Knoten (110), einer Angabe, die angibt, dass die Einrichtung der zweiten PDU-Sitzung und/oder des zweiten QoS-Ablaufs für eine Redundanzübertragung zu priorisieren ist.

9. Verfahren nach einem der Ansprüche 7-8, wobei das Verfahren ferner Folgendes umfasst:
- Empfangen, von dem ersten RAN-Knoten (110), einer Angabe, die verhindert, dass der zweite RAN-Knoten (111) eine Änderung des sekundären RAN-Knotens einleitet.

10. Verfahren nach einem der Ansprüche 7-9, wobei das Verfahren ferner Folgendes umfasst:
- Empfangen, von dem ersten RAN-Knoten (110), einer Angabe, die von dem ersten RAN-Knoten (110) verwendete Ressourcen angibt, um den zweiten RAN-Knoten (111) darüber zu informieren, die angegebenen Ressourcen nicht zu verwenden.

11. Verfahren nach einem der Ansprüche 7-10, wobei das Verfahren ferner Folgendes umfasst:
- Einrichten oder Herstellen (1002) der zweiten PDU-Sitzung und/oder des zweiten QoS-Ablaufs für eine Redundanzübertragung auf Grundlage der empfangenen Angabe oder Angaben.

12. Verfahren nach einem der Ansprüche 7-11, wobei der erste RAN-Knoten ein Masterknoten ist und der zweite RAN-Knoten ein sekundärer RAN-Knoten ist.

13. Erster Funkzugangsnetzknoten, RAN-Knoten, zum Handhaben von Dualkonnektivität, DC, bei einer Redundanzübertragung in einem drahtlosen Kommunikationsnetz, wobei eine erste Protokolldateneinheitssitzung, PDU-Sitzung, und/oder ein erster Dienstgüteablauf, QoS-Ablauf, von einer Benutzerausrüstung, UE, (120) zu einem Kernnetz, CN, (130) über den ersten RAN-Knoten (110) hergestellt wird, wobei der erste RAN-Knoten dazu konfiguriert ist, eines der Verfahren nach Anspruch 1-6 durchzuführen.

14. Zweiter Funkzugangsnetzknoten, RAN-Knoten, zum Handhaben von Dualkonnektivität, DC, bei einer Redundanzübertragung in einem drahtlosen Kommunikationsnetz, wobei eine erste Protokolldateneinheitssitzung, PDU-Sitzung, und/oder ein erster Dienstgüteablauf, QoS-Ablauf, von einer Benutzerausrüstung, UE, (120) zu einem Kernnetz, CN, (130) über einen ersten RAN-Knoten (110) hergestellt wird und wobei der zweite RAN-Knoten dazu konfiguriert ist, eines der Verfahren nach Anspruch 7-12 durchzuführen.

15. Computerprogramm, das Anweisungen umfasst, die bei Ausführung durch einen Prozessor den Prozessor dazu veranlassen, Handlungen nach einem der Ansprüche 1-12 durchzuführen.

## Revendications

1. Procédé, exécuté par un premier noeud de réseau d'accès radio, RAN, (110) pour gérer la connectivité double, DC, dans une transmission redondante dans un réseau de communication sans fil, dans lequel une première session d'unité de données de protocole, PDU, et/ou un premier flux de qualité de service, QoS, sont établis à partir d'un équipement utilisateur, UE, (120) vers un réseau central, CN, (130) via le premier noeud RAN (110), le procédé comprenant :
- la détermination (901) de l'établissement d'une seconde session PDU et/ou d'un second flux QoS entre l'UE et le CN via un second noeud RAN (111), le procédé étant **caractérisé en ce qu'**il comprend en outre :
- l'envoi (902), au second noeud RAN (111), d'une requête d'établissement de la seconde session PDU et/ou du second flux QoS, dans lequel la requête comprend une indication que la seconde session PDU et/ou le second flux QoS sont établis pour une transmission redondante.

2. Procédé selon la revendication 1, dans lequel le procédé comprend en outre :
- l'envoi, au second noeud RAN (111), d'une indication selon laquelle l'établissement de la seconde session PDU et/ou du second flux QoS pour la transmission redondante doit être prioritaire.

3. Procédé selon l'une quelconque des revendications 1 et 2, dans lequel le procédé comprend en outre :
- l'envoi, au second noeud RAN (111), d'une indication empêchant le second noeud RAN (111) d'initier un changement de noeud RAN secondaire.

4. Procédé selon l'une quelconque des revendications 1 à 3, dans lequel le procédé comprend en outre :
- l'envoi, au second noeud RAN (111), d'une indication indiquant les ressources utilisées par le premier noeud RAN (110) afin d'informer le second noeud RAN (111) de ne pas utiliser les ressources indiquées.

5. Procédé selon l'une quelconque des revendications 1 à 4, dans lequel le premier noeud RAN est un noeud maître et le second noeud RAN est un noeud RAN secondaire.

6. Procédé selon l'une quelconque des revendications 1 à 5, dans lequel le premier noeud RAN et le second noeud RAN sont des noeuds RAN de nouvelle génération, NG-RAN.

7. Procédé, exécuté par un second noeud de réseau d'accès radio, RAN, pour gérer la connectivité double, DC, dans une transmission redondante dans un réseau de communication sans fil, dans lequel une première session d'unité de données de protocole, PDU, et/ou un premier flux de qualité de service, QoS, sont établis à partir d'un équipement utilisateur, UE, (120) vers un réseau central, CN, (130) via un premier noeud RAN (110), **caractérisé en ce qu'**il comprend :
- la réception (1001), en provenance du premier noeud RAN (110), d'une requête d'établissement d'une seconde session PDU et/ou d'un second flux QoS, dans lequel la requête comprend une indication selon laquelle la seconde session PDU et/ou le second flux QoS sont établis pour une transmission redondante.

8. Procédé selon la revendication 7, dans lequel le procédé comprend en outre :
- la réception, en provenance du premier noeud RAN (110), d'une indication selon laquelle l'établissement de la seconde session PDU et/ou du second flux QoS pour la transmission redondante doit être prioritaire.

9. Procédé selon l'une quelconque des revendications 7 et 8, dans lequel le procédé comprend en outre :
- la réception, en provenance du premier noeud RAN (110), d'une indication empêchant le second noeud RAN (111) d'initier un changement de noeud RAN secondaire.

10. Procédé selon l'une quelconque des revendications 7 à 9, dans lequel le procédé comprend en outre :
- la réception, en provenance du premier noeud RAN (110), d'une indication indiquant les ressources utilisées par le premier noeud RAN (110) afin d'informer le second noeud RAN (111) de ne pas utiliser les ressources indiquées.

11. Procédé selon l'une quelconque des revendications 7 à 10, dans lequel le procédé comprend en outre :
- la mise en place ou l'établissement (1002) de la seconde session PDU et/ou du second flux QoS pour une transmission redondante, sur la base de l'indication ou des indications reçues.

12. Procédé selon l'une quelconque des revendications 7 à 11, dans lequel le premier noeud RAN est un noeud maître et le second noeud RAN est un noeud RAN secondaire.

13. Premier noeud de réseau d'accès radio, RAN, pour gérer la connectivité double, DC, dans une transmission redondante dans un réseau de communication sans fil, dans lequel une première session d'unité de données de protocole, PDU, et/ou un premier flux de qualité de service, QoS, sont établis à partir d'un équipement utilisateur, UE, (120) vers un réseau central, CN, (130) via le premier noeud RAN (110), dans lequel le premier noeud RAN est configuré pour exécuter l'un quelconque des procédés selon les revendications 1 à 6.

14. Second noeud de réseau d'accès radio, RAN, pour gérer la connectivité double, DC, dans une transmission redondante dans un réseau de communication sans fil, dans lequel une première session d'unité de données de protocole, PDU, et/ou un premier flux de qualité de service, QoS, sont établis à partir d'un équipement utilisateur, UE, (120) vers un réseau central, CN, (130) via un premier noeud RAN (110), et dans lequel le second noeud RAN est configuré pour exécuter l'un quelconque des procédés selon les revendications 7 à 12.

15. Programme informatique comprenant des instructions qui, lorsqu'elles sont exécutées par un processeur, amènent le processeur à exécuter des actions selon l'une quelconque des revendications 1 à 12.
